# EUROPEAN PATENT SPECIFICATION

(11) **EP 4 470 812 B1**
(45) Date of publication and mention of the grant of the patent: **29.04.2026**
(21) Application number: 23746044.9
(22) Date of filing: 16.01.2023
(51) Int. Cl.: B60K 1/00, B60K 1/04

(54) **ELECTRIC ALL-TERRAIN VEHICLE**
ELEKTRISCHES GELÄNDEFAHRZEUG
VÉHICULE TOUT-TERRAIN ÉLECTRIQUE

(30) Priority: 25.01.2022 CN 202210165678
(43) Date of publication of application: 04.12.2024
(73) Proprietor: Zhejiang CFMOTO Power Co., Ltd., Hangzhou, Zhejiang 311199 (CN)
(72) Inventor: HU, Xiayang, Hangzhou, Zhejiang 311199 (CN); HUANG, Yunqiang, Hangzhou, Zhejiang 311199 (CN); LI, Changjiang, Hangzhou, Zhejiang 311199 (CN); CHENG, Fuying, Hangzhou, Zhejiang 311199 (CN); HOU, Jiahui, Hangzhou, Zhejiang 311199 (CN); LIANG, Jianwu, Hangzhou, Zhejiang 311199 (CN); FENG, Guangxuan, Hangzhou, Zhejiang 311199 (CN); SONG, Jian, Hangzhou, Zhejiang 311199 (CN)
(74) Representative: Sun, Yiming
(86) International application number: PCT/CN2023/072305
(87) International publication number: WO 2023/143162

(56) References cited:
- CN-A- 103 625 277
- CN-U- 208 664 935
- CN-U- 212 677 022
- CN-U- 212 677 022
- CN-U- 214 776 329
- CN-U- 214 776 329
- CN-U- 218 229 274
- CN-U- 218 229 275
- US-A1- 2005 224 262
- US-A1- 2010 194 086
- US-B1- 10 173 512

## Description

### RELATED APPLICATION INFORMATION

The present application claims the benefits of priority to Chinese Patent Application No. 202210165678.X, filed with the Chinese Patent Office on Jan. 25, 2022.

### FIELD OF THE DISCLOSURE

The present invention relates to the field of vehicles, and particularly to an electric all-terrain vehicle.

### BACKGROUND OF THE DISCLOSURE

All-terrain vehicles (ATVs) are designed for use on various types of rough terrain, able to drive freely on terrains that are difficult for ordinary vehicles to traverse. Modern ATVs, also known as "All-terrain four-wheeled off-road locomotive" vehicles, are simple, practical, and have good off-road performance. ATVs can generate greater friction with the ground and reduce the pressure of the vehicle on the ground, thereby making it easy to drive on beaches, river beds, forest roads, streams, and harsh desert terrains. ATVs can be used to carry people or transport goods.

Under the trend of global electrification, the electrification of all-terrain vehicles has become an unstoppable development trend under the call for energy conservation and emission reduction. However, the electrification of all-terrain vehicles means that they need to be equipped with battery pack to store energy for all-terrain vehicles, while being equipped with traditional drive system. The longer the range of all-terrain vehicles, the more the volume and weight of the battery pack will increase accordingly. As the main source of driving force for an electric all-terrain vehicle, the battery pack, the electric motor and the Motor Control Unit (hereinafter referred to as Tri-core system) are the most core components of electric all-terrain vehicles. The layout of the Tri-core system is closely related to the transmission path and arrangement of drive train of electric all-terrain vehicles. A good arrangement of the Tri-core system can greatly improve the performance and assembly space of the entire vehicle. Therefore, the arrangement of the relevant components of each system within the limited frame support space is a research topic to which technical personnel in this field are dedicated.

US10173512B1 discloses a battery mounting device including a body having a frame with a connecting portion. The connecting portion includes at least one positioning portion. An elevating seat is mounted to the frame and is movable between a mounting position and a replacement position lower than the mounting position. The elevating seat includes at least one positioning member disengageably coupled to the at least one positioning portion. An actuation device is mounted to the frame and is operable to move the elevating seat in the vertical direction. A battery seat is detachably mounted to the elevating seat and includes a lower positioning portion coupled with a lower positioning member of the elevating seat in the mounting position. When the elevating seat is in the replacement position, the battery seat is placed on the ground, and the lower positioning portion is disengaged from the lower positioning member.

### SUMMARY OF THE INVENTION

An electric all-terrain vehicle is provided to solve at least one problem above. The invention is set out in the appended set of claims.

For better understanding of the above objects, features and advantages of the present disclosure, the embodiments of the present disclosure will be described in detail below with reference to the accompanying drawings.

### BRIEF DESCRIPTION OF THE DRAWINGS

The embodiments only represent several embodiments of the present invention, and the descriptions thereof are specific and detailed, but should not be construed as a limitation on the scope of the invention. In FIGs:
FIG. 1 is a perspective view of an electric all-terrain vehicle;
FIG. 2 is a perspective view of an electronic control system mounted in front of a frame in an electric all-terrain vehicle;
FIG. 3 is a perspective view of an electronic control system mounted behind the frame in an electric all-terrain vehicle;
FIG. 4 is a perspective view of an electronic control system mounted on the frame in an electric all-terrain vehicle;
FIG. 5 is a top view of the electronic control system mounted on the frame in the electric all-terrain vehicle;
FIG. 6 is a side view of a Motor Control Unit mounted on the frame according to a first embodiment;
FIG. 7 is a side view of the Motor Control Unit mounted on the frame according to a second embodiment;
FIG. 8 is a side view of an offset drive train on mounted on an electric all-terrain vehicle;
FIG. 9 is a sectional view of the offset drive train;
FIG. 10 is a perspective view of a prime mover assembly according to the first embodiment;
FIG. 11 is a semi-sectional view of the prime mover assembly according to the first embodiment;
FIG. 12 shows a power transmission path of the prime mover assembly according to the first embodiment;
FIG. 13 shows another power transmission path of the prime mover assembly according to the first embodiment;
FIG. 14 is a semi-sectional view of the prime mover assembly according to the second embodiment;
FIG. 15 is a side view of the prime mover assembly according to a third embodiment;
FIG. 16 is a side view of the prime mover assembly according to a fourth embodiment;
FIG. 17 is an exploded view of the prime mover assembly according to the fourth embodiment;
FIG. 18 is a side view of the prime mover assembly according to a fifth embodiment;
FIG. 19 is an exploded view of the prime mover assembly according to the fifth embodiment;
FIG. 20 is an exploded view of a prime mover assembly housing;
FIG. 21 is a side view of a prime mover assembly mounted on the rear;
FIG. 22 is a side view of a driving force transmission path; and
FIG. 23 is a top view of the driving force transmission path.

### DETAILED DESCRIPTION

Workers of ordinary skill in the art may make numerous modifications and improvements without departing from the concepts of the present invention. Therefore, the protection scope of the patent of the present invention is defined to include the full breadth of the appended claims.

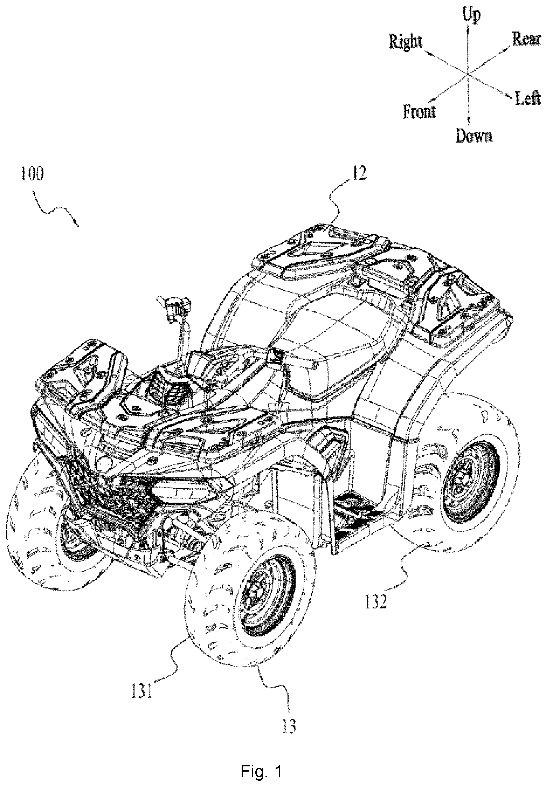

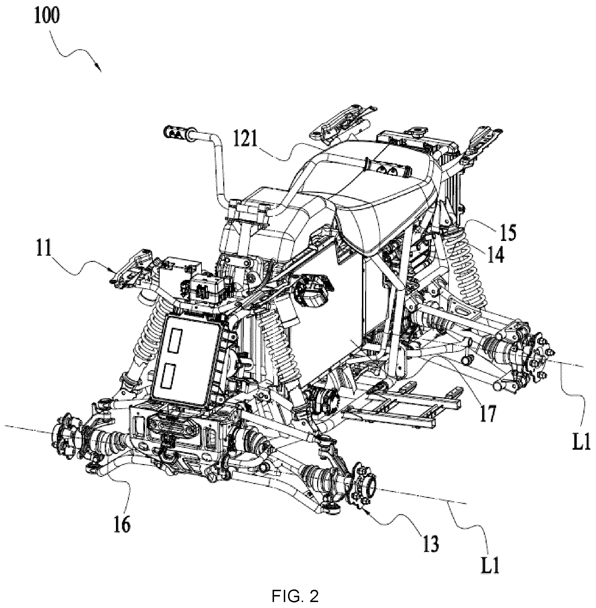

FIG. 1 and FIG. 2 show an electric all-terrain vehicle 100, which includes a frame 11, a vehicle cover 12, a set of wheels 13, a drive system 14, a Motor Control Unit 15, a drive train 16, and a battery pack 17. The general orientations of front, rear, up (upper), down (lower), left and right for the electric all-terrain vehicle 100 are defined in FIG. 1. The drive system 14 and the drive train 16 are at least partially mounted on the frame 11, and the battery pack 17 is at least partially connected to the drive system 14 to provide electric energy for the drive system 14. The vehicle cover 12 is at least partially mounted on the frame 11 to protect the drive system 14, the drive train 16, and the battery pack 17.

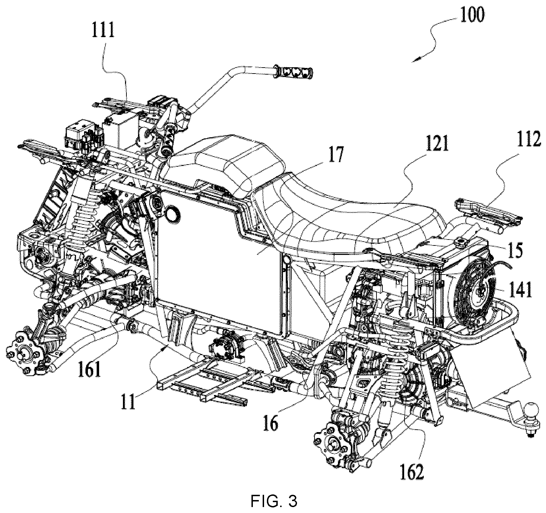

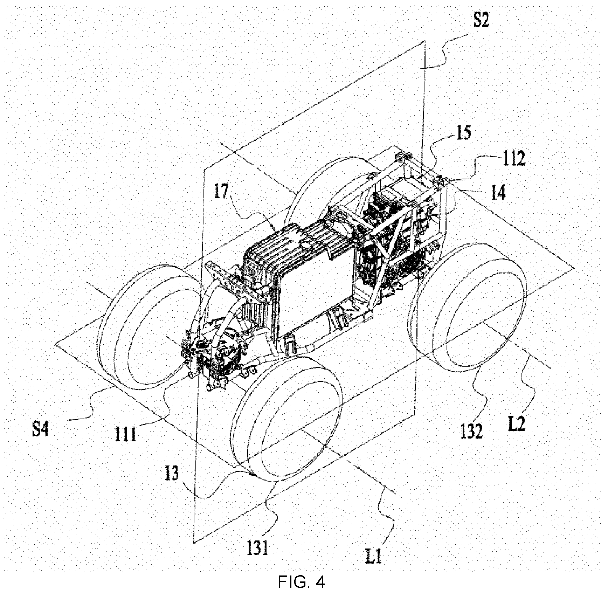

As shown in FIG. 3 and FIG. 4, the drive system 14 includes an electric motor assembly 141 at least partially mounted on the frame 11. Both the battery pack 17 and the Motor Control Unit 15 are at least partially mounted on the frame 11. Furthermore, the battery pack 17 is electrically connected to the electric motor assembly 141 to provide a continuous electric energy for the electric motor assembly 141. The Motor Control Unit 15 is electrically connected to the electric motor assembly 141 for controlling an operation status of electric motor assembly 141. The frame 11 includes a first frame assembly 111 and a second frame assembly 112 distributed along a front-rear direction of the electric all-terrain vehicle 100. The set of wheels 13 includes a pair of front wheels 131 and a pair of rear wheels 132. Alternatively, the pair of front wheels 131 are at least partially connected to the first frame assembly 111, and the pair of rear wheels 132 are at least partially connected to the second frame assembly 112. Furthermore, the set of wheels 13 includes a pair of front wheels 131 (see FIG. 1) and a pair of rear wheels 132 (see FIG. 1). A rotation axle of the front wheels 131 is defined as a first wheel axle 1311, and a rotation axle of the rear wheels 131 is defined as a second wheel axle 1312. A first wheel axle centerline L1 is defined as a straight line connecting the two rotation center points of the two front wheels 131, and a second wheel axle centerline L2 is defined as a straight line connecting the two rotation center points of the two rear wheels 132. The drive train 16 includes a drive axle assembly 161. Alternatively, the drive axle assembly 161 includes a first drive axle 1611 and a second drive axle 1612. The first drive axle 1611 is at least partially mounted on the first frame assembly 111, and the second drive axle 1612 is at least partially mounted on the second frame assembly 112, and the battery pack 17 is at least partially mounted on the first frame assembly 111 and/or the second frame assembly 112.

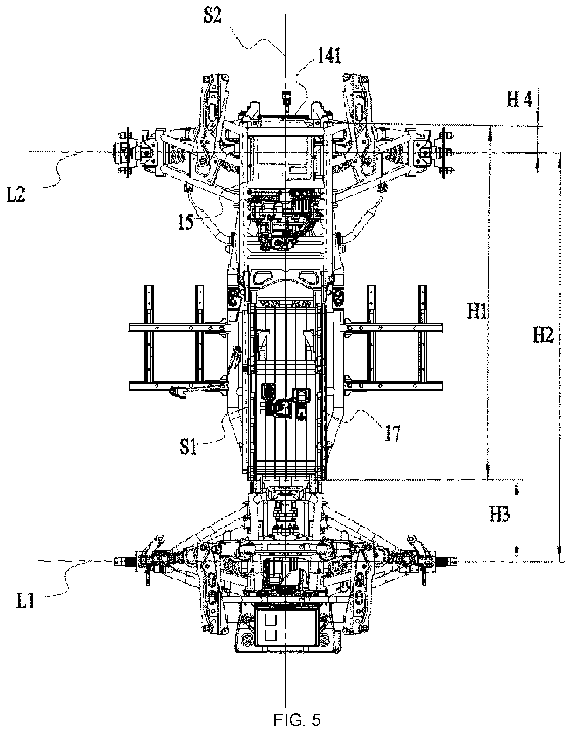

As shown in FIG. 5, in some embodiments, the battery pack 17, the electric motor assembly 141 and the Motor Control Unit 15 are mounted substantially along the front-rear direction of the electric all-terrain vehicle 100. A projection of the Motor Control Unit 15, a projection of the electric motor assembly 141 and a projection of the battery pack 17 on a plane perpendicular to an up-down direction of the vehicle cooperatively define an EIC system projection area S1. A maximum length occupied by the EIC system projection area S1 along a front-rear direction of the electric all-terrain vehicle 100 is defined as an EIC longitudinal length H1. A projection of the first wheel axle centerline L1 on the plane perpendicular to the up-down direction of the vehicle is defined as a first projection line, and a second wheel axle centerline L2 on the plane perpendicular to the up-down direction of the vehicle is defined as a second projection line, a distance between the first projection line and the second projection line is defined as a wheelbase distance H2. A ratio of the wheelbase distance H2 to the EIC longitudinal length H1 is in the range from 0.7 to 2.5. Alternatively, the ratio of the wheelbase distance H2 to the EIC longitudinal length H1 is in the range from 0.9 to 2.0. Alternatively, the ratio of the wheelbase distance H2 to the EIC longitudinal length H1 is in the range from 1.1 to 1.6. This allows the Motor Control Unit 15, the electric motor assembly 141, and the battery pack 17 of the electric all-terrain vehicle 100 to be evenly distributed along the front-rear direction of the electric all-terrain vehicle 100, which is conducive to the reasonable distribution of the center of gravity of the electric all-terrain vehicle 100. The electric all-terrain vehicle 100 defines a longitudinal mid-plane S2 perpendicular to a left-right direction of the electric all-terrain vehicle 100, and the electric all-terrain vehicle 100 is substantially symmetrical with respect to the longitudinal mid-plane S2. In some embodiments, the longitudinal mid-plane S2 at least partially intersects with the EIC system projection area S1. Preferably, the EIC system projection area S1 is substantially symmetrical with respect to the longitudinal mid-plane S2, the weight and volume distribution of the battery pack 17, the electric motor assembly 141, and the Motor Control Unit 15 of the electric all-terrain vehicle 100 are substantially evenly distributed on the left and right sides of the electric all-terrain vehicle 100. This can make the center of gravity of the electric all-terrain vehicle 100 substantially located at the center position of the electric all-terrain vehicle 100, thereby making the electric all-terrain vehicle 100 more stable during running.

In some embodiments, a distance from the edge of the Tri-core system projection area S1 adjacent to the front wheels to the first wheel axle centerline L1 is defined as a distance H3, and the distance H3 is in the range from 0 mm to 1500 mm, and a distance from the edge of the Tri-core system projection area S1 adjacent to the rear wheels to the second wheel axle centerline L2 is defined as a distance H4, and the distance H4 is in the range from 0 mm to 1500 mm. In some alternative embodiments, a distance from the edge of the Tri-core system projection area S1 adjacent to the front wheels to the first wheel axle centerline L1 is defined as a distance H3, and the distance H3 is in the range from 100 mm to 1000 mm, and a distance from the edge of the Tri-core system projection area S1 adjacent to the rear wheels to the second wheel axle centerline L2 is defined as a distance H4, and the distance H4 is in the range from 0 mm to 1000 mm. In some alternative embodiments, a distance from the edge of the Tri-core system projection area S1 adjacent to the front wheels to the first wheel axle centerline is defined as a distance H3, and the distance H3 is in the range from 200 mm to 500 mm, and a distance from the edge of the Tri-core system projection area S1 adjacent to the rear wheels to the second wheel axle centerline is defined as a distance H4, and the distance H4 is in the range from 0 mm to 500 mm. The battery pack 16, the electric motor assembly 141, and the Motor Control Unit 17 are positioned in appropriate positions on the entire vehicle, and the distances from the above three to the wheel axles are controlled in the reasonable ranges, thereby avoiding the center of gravity of the vehicle being too forward or backward and ensuring the stability and handling of the electric all-terrain vehicle 100.

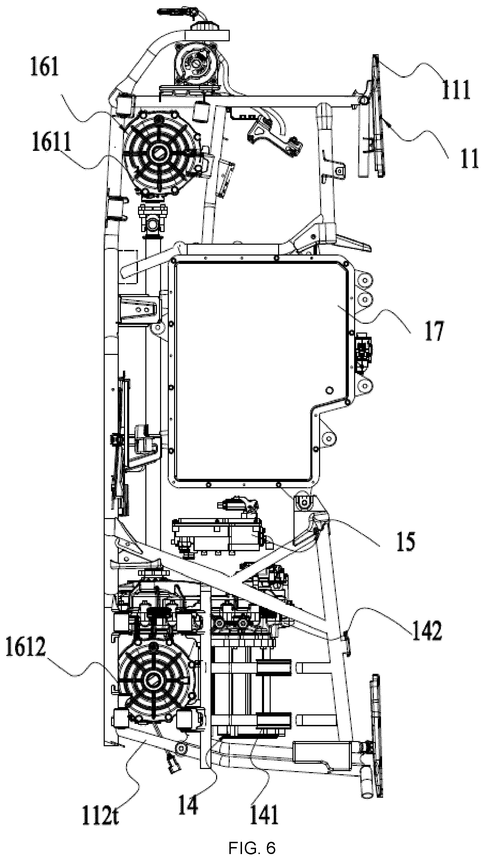

As shown in FIG. 6, in some embodiments, at least two projections of a projection of the Motor Control Unit 15, a projection of the battery pack 17, and a projection of the electric motor assembly 141 on a plane perpendicular to a front-rear direction of the vehicle at least partially overlap. The area of the Tri-core system projection area on the plane perpendicular to the front-rear direction of the vehicle is defined as a maximum projection area A1. The area where at least two projections of the projection of the electric motor assembly 141, the projection of battery pack 16, and the Motor Control Unit 17 on the plane perpendicular to the front-rear direction of the vehicle overlap is defined as a projection overlap area A2. In some alternative embodiments, a ratio of the maximum projection area A1 to the projection overlapping area A2 may be in the range from 0.4 to 1.0. A ratio of the maximum projection area A1 to the projection overlapping area A2 is 0.7. The electric motor assembly 17 is positioned between the electric motor assembly 141 and the battery pack 17, and when seen from front to rear, the battery pack 17, the Motor Control Unit 15, and the electric motor assembly 141 are mounted in sequence. The electric motor assembly 141 and the Motor Control Unit 15 are at least partially mounted on the second frame assembly 112, and the battery pack 17 is at least partially mounted on the first frame assembly 111 and/or the second frame assembly 112. In the present application, the shortest side length of the Motor Control Unit 15 extends substantially along the front-rear direction of the electric all-terrain vehicle 100, that is, the Motor Control Unit 15 is vertically placed between the battery pack 17 and the electric motor assembly 141, which further shorten the length of the Tri-core system projection area S1. Furthermore, the battery pack 17 and the Motor Control Unit 15 may be placed between the first drive axle 1611 and the second drive axle 1612, and the electric motor assembly 141 may be at least partially placed at the upper end of the second drive axle 1612, which not only achieves the shortest length of the Tri-core system projection area S1, but also fully utilizes the vehicle space, thereby making the vehicle more compact. It should be noted that the Motor Control Unit 15 may also be placed at the rear end of the electric motor assembly 141, and the electric motor assembly 141 may be placed between the Motor Control Unit 15 and the battery pack 17.

The drive system 14 further includes a gearbox assembly 142. In this embodiment, the gearbox assembly 142 is at least partially positioned between the electric motor assembly 141 and the Motor Control Unit 15. When viewed from the front-rear direction of the electric all-terrain vehicle 100, the gearbox assembly 142 at least partially overlaps with the Motor Control Unit 15, which can make the high-voltage wiring harness connected between the Motor Control Unit 15, the battery pack 17, and the electric motor assembly 141 shorter, thereby reduce the mounting difficulty and cost of the electric all-terrain vehicle 100. Alternatively, the Motor Control Unit 15 may be fixedly connected to the frame 11, or the Motor Control Unit 15 may be fixedly connected to the battery pack 17. The relatively large volume of the battery pack 17 provides the possibility for the fixation of the Motor Control Unit 15.

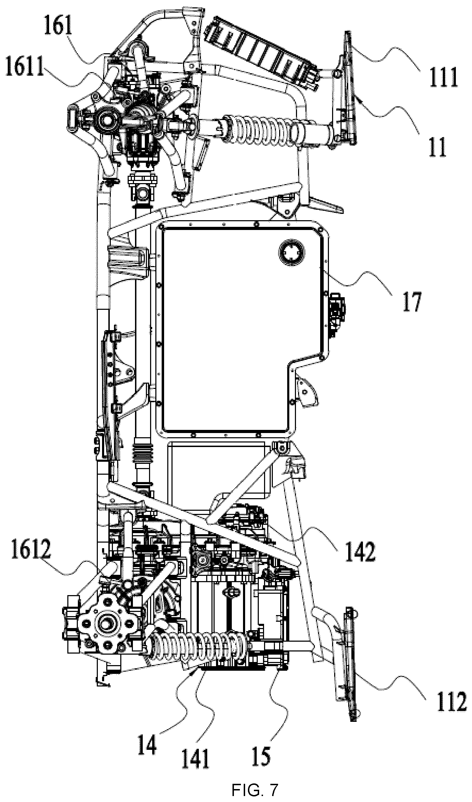

As shown in FIG. 7, in some alternative embodiments, at least two projections of a projection of the Motor Control Unit 15, a projection of the battery pack 141, and a projection of the electric motor assembly 17 on a plane perpendicular to an up-down direction of the vehicle at least partially overlap. Alternatively, the projection of the electric motor assembly 141 at least partially overlaps with the projection of the battery pack 17 on the plane perpendicular to the front-rear direction of the vehicle. Furthermore, the projection of the Motor Control Unit 15 at least partially overlaps with the projection of electric motor assembly 141 on the plane perpendicular to the up-down direction of the vehicle. Alternatively, the Motor Control Unit 15 is at least partially positioned at the upper end of the electric motor assembly 141, and the battery pack 17 is positioned at the front end of the electric motor assembly 141, which can further shorten the length of Tri-core system projection area S1 in the front-rear direction of the vehicle, reduce the height of the battery pack 17, and effectively control the overall height of the front end of the electric all-terrain vehicle 100. In this embodiment, when viewed along the up-down direction of the electric all-terrain vehicle 100, at least two of the Motor Control Unit 15, the electric motor assembly 141, and the second drive axle 1612 at least partially overlap. Alternatively, the electric motor assembly 141 is mounted on the second frame assembly 112, and the Motor Control Unit 15 is also mounted on and fixedly connected to the second frame assembly 112 and positioned above the electric motor assembly 141. In some alternative embodiments, the Motor Control Unit 15 may be mounted on and fixedly connected to the electric motor assembly 141, which can make the connection between the electric motor assembly 141 and the Motor Control Unit 15 closer, save the assembly space of the electric all-terrain vehicle 100, and further reduce the length of wire harness connections between various electrical components, thereby reducing assembly costs and material costs. It should be noted that in the electric all-terrain vehicle 100 with a lower height of the battery pack 17 or a lower height limit for the front end, the Motor Control Unit 15 may also be at least partially mounted on the upper end of battery pack 17.

Alternatively, a certain accommodation space is defined between the drive system 14 and the battery pack 17 due to the placement of the Motor Control Unit 15 at the upper end of the electric motor assembly 141. An under-seat storage box may be arranged in this accommodation space, which further increase the storage space of the electric all-terrain vehicle 100.

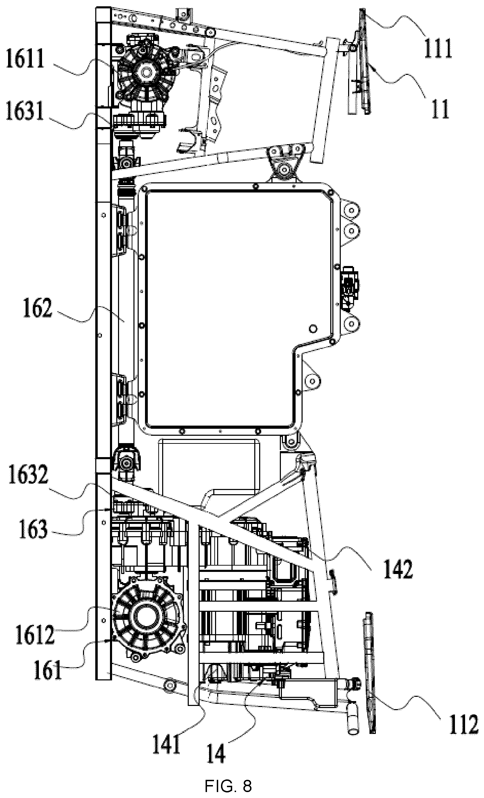

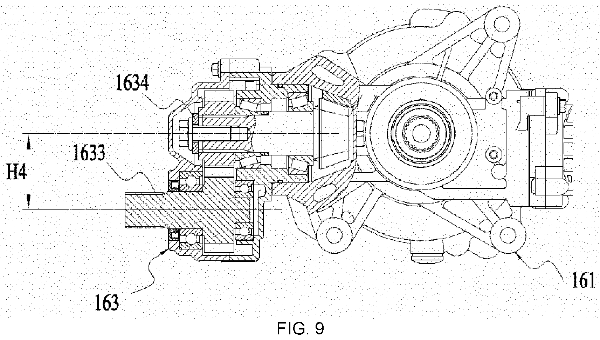

As shown in FIG. 8 and FIG. 9, the drive train 16 further includes a drive shaft 162 and an offset drive train 163. Alternatively, the offset drive train 163 may be mounted between the drive shaft 162 and the drive axle assembly 161. The offset drive train 163 is generally used in pairs, that is, in the present application, the offset drive train 163 includes a first offset drive train 1631 and a second offset drive train 1632. The first offset drive train 163 may be mounted between the drive shaft 162 and the first drive axle 1611, and the second offset drive train 1632 may be mounted between the drive shaft 162 and the second drive axle 1612. In some alternative embodiments, the first offset drive train 1631 may be mounted between the first drive axle 1611 and the drive shaft 162, and the second offset drive train 1632 may be mounted between the drive system 14 and the drive shaft 162. When the second offset drive train 1632 is mounted between the drive axle assembly 161 and the drive system 14, the drive shaft 162 can be divided into two sections, and the offset drive train 163 is mounted between a first section and a second section. Alternatively, the first section at least partially penetrates the drive system 14, and one end of the first section is connected to the second drive axle 1612, while the other end of the first section is connected to the offset drive train 163 in a transmission mode. One end of the second section is connected to the offset drive train 163 in a transmission mode, and the other end of the second section is connected to the first drive axle 1611 in a transmission mode. Alternatively, the drive system 14 includes a gearbox assembly 142. The drive shaft 162 at least partially penetrates the gearbox assembly 142. The drive shaft 162 is equipped with gears, and the drive shaft 162 is connected to the gearbox assembly 142 in a transmission mode by means of the gears. As an example, the offset drive train 163 includes a first shaft 1633 and a second shaft 1634 connected together in a transmission mode, and the connection methods include but are not limited to gear meshing, belt transmission, and other connection methods that can transmit driving force.

In this embodiment, the first shaft 1633 of the first offset drive train 1631 is connected to the drive shaft 162 at one end away from the second shaft 1634, and the second shaft 1634 of the first offset drive train 1631 is connected to the first drive axle 1611 at one end away from the first shaft 1633. Similarly, the second shaft 1634 of the second offset drive train 1632 is connected to the gearbox assembly 142 at one end away from the first shaft 1633, and the first shaft 1633 of the second offset drive train 1632 is connected to the drive shaft 162 at one end away from the second shaft 1634. In some alternative embodiments, the distance from an axis of the first shaft 1633 and an axis of the second shaft 1634 is defined as an offset distance H5 of the offset drive train 163. In this application, the offset distance H5 of the offset drive train 163 may be in the range from 50 mm to 150 mm. Alternatively, the offset distance H5 may be in the range from 30 mm to 300 mm. This offset distance can change the transmission path and direction of the driving force, enable other components to be mounted on the original transmission path of the driving force, and change the layout space of the electric all-terrain vehicle 100 according to design requirements. In this application, the layout position of the battery pack 17 can be reduced, on the one hand, which can lower the center of gravity of the electric all-terrain vehicle 100, and improve the driving stability of the electric all-terrain vehicle 100, on the other hand, which can increase the space used to accommodate battery pack 17, thereby making the capacity of battery pack 17 larger and the endurance of electric all-terrain vehicle 100 longer. Preferably, when a suitable transmission method is used between the first shaft 1633 and the second shaft 1634, without considering the loss of driving force and the arrangement of related components, the offset distance H5 may be within a larger range.

In some alternative embodiments, the axis of the first shaft 1633 is substantially parallel to the axis of the second shaft 1634, and second shaft 1634 is at least partially mounted at the upper end of the second axis 1634. Further, in some alternative embodiments, a projection of the axis of the first shaft 1633 at least partially overlaps with a projection of the axis of the second shaft 1634 on the plane perpendicular to the up-down direction of the vehicle, which can use a shorter offset distance H5 to achieve transmission avoidance of the driving force in the up-down direction. In some alternative embodiments, the first shaft 1633 may be at least partially mounted on the left or right side of the second shaft 1634, that is, the transmission path of the driving force may be arranged on the left or right side of the battery pack 17, which avoids the transmission path of driving force completely without lifting the position of battery assembly 17. It should be noted that in certain embodiments, the first shaft 1633 may be at least partially positioned above the second shaft 1634 or in other directions. Connection methods such as bevel gears may also be used to define a certain angle between the axis of the first shaft 1633 and the axis of the second shaft 1634, thereby changing the output angle of the driving force and making the spatial layout of the electric all-terrain vehicle 100 more flexible. It should be noted that in addition to being used in pairs, the offset drive train 163 can also be used separately. In this implementation, the output end of the drive system 14 and the input end of the drive train 16 do not need to be arranged on the same axis, which makes the layout of the relevant components of the drive train 16 of the electric all-terrain vehicle 100 more flexible. In addition, the offset drive train 163 further includes an offset housing 1635, with the first shaft 1633 and the second shaft 1634 at least partially located inside the offset housing 1635. This embodiment may be used independently, or may be combined with other embodiments in the present application.

The electric all-terrain vehicle 100 further includes a prime mover assembly B1, which includes at least a portion of the drive system 14 and at least a portion of the drive train 16. The Integrated layout of the electric all-terrain vehicle 100 can be effectively achieved by a highly compact and integrated design between the at least a portion of the drive system 14 and the at least a portion of the drive train 16.

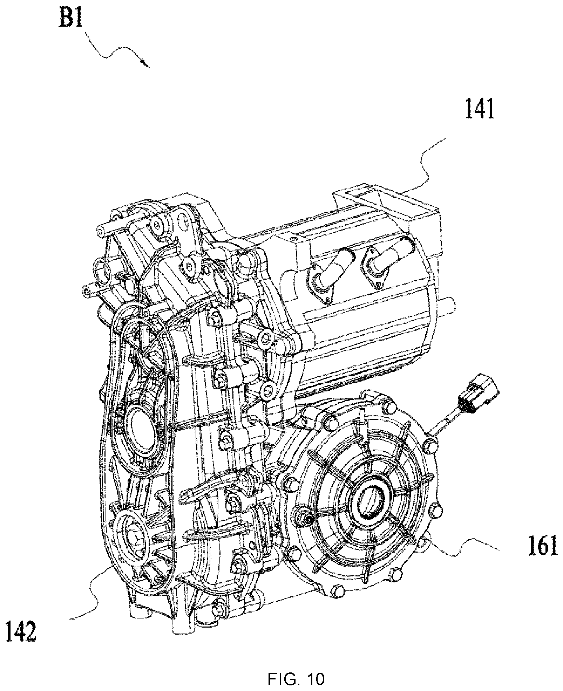

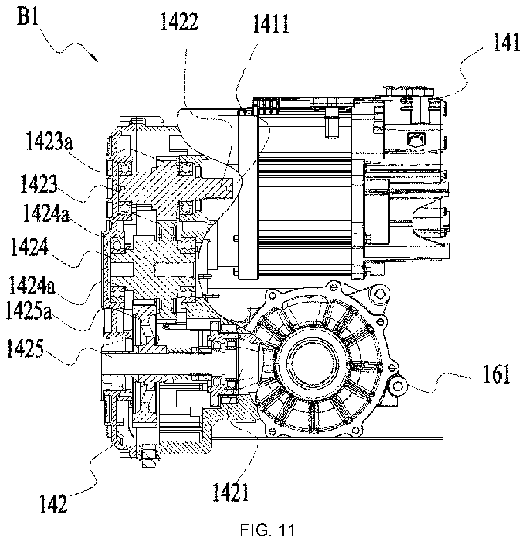

As shown in FIG. 10 and FIG. 11, in some alternative embodiments, the prime mover assembly B1 may include an electric motor assembly 141, a gearbox assembly 142, and a drive axle assembly 161. The electric motor assembly 141 includes a motor output end 1411, and the gearbox assembly 142 includes a gearbox output end 1421 and a gearbox input end 1422. The driving force output by electric motor assembly 141 is transmitted to gearbox assembly 142 through the motor output end 1411, which is connected to the gearbox output end 1422. Furthermore, the gearbox assembly 142 is connected to the electric motor assembly 141 through the gearbox input end 1422 and is connected to the drive axle assembly 161 through the gearbox output end 1421. In some alternative embodiments, the gearbox assembly 142 is equipped with a gearbox shaft, and the number of gearbox shafts may be two, three, or more according to the requirements of the electric all-terrain vehicle 100. Alternatively, the gearbox is equipped with three gearbox shafts distributed along the up-down direction of the gearbox assembly 142 including a first gearbox shaft 1423, a second gearbox shaft 1424, and a third gearbox shaft 1425 from top to bottom. The electric motor assembly 141 further includes a motor output shaft, which is connected to the first gearbox shaft 1423 in a transmission mode and outputs the driving force generated by the electric motor assembly 141 to the gearbox assembly 142. Alternatively, the motor output shaft is connected to the first gearbox shaft 1423 in a transmission mode by spline meshing, and transmits the driving force of the electric motor assembly 141 to the gearbox assembly 142. Furthermore, the gearbox assembly 142 is connected to the drive axle assembly 161 through a third gearbox shaft 1425 in a transmission mode and transmits the driving force to the drive axle assembly 161.

Alternatively, the drive axle assembly 161 and the electric motor assembly 141 may be arranged at the same end of the gearbox assembly 142, which can minimize the space occupied by the prime mover assembly B1 in the front-rear direction of the electric all-terrain vehicle 100. It should be noted that in certain scenarios, in order to meet the overall assembly requirements of the electric all-terrain vehicle 100, the electric motor assembly 141 and the drive axle assembly 161 may be arranged on the opposite side. Furthermore, a first reduction gear 1423a is provided on the first gearbox shaft 1423, a second reduction gear 1424a is provided on the second gearbox shaft 1424, and a third reduction gear 1425a is provided on the third gearbox shaft 1425. At least two second reduction gears 1424 are provided, and the diameter or tooth number of the two second reduction gears 1424a are different. The first reduction gear 1423a meshes with one of the second reduction gears 1424a, and the third reduction gear 1425a meshes with the other second reduction gear 1424a. The appropriate reduction ratio can be determined by reasonably choosing the tooth number of the two second reduction gears 1424a. Alternatively, the tooth ratio of the first reduction gear 1423a to the second reduction gear 1424a meshed with the first reduction gear 1423a is in the range from 1 to 3, and the tooth ratio of the second reduction gear 1424a meshed with the third reduction gear 1425a to the third reduction gear 1425a is in the range from 1.5 to 2.5. Correspondingly, the total reduction ratio of the gearbox assembly 142 is in the range from 3 to 4.5. That is, a ratio of a rotational speed of the first gearbox shaft 1423 to a rotational speed of the third gearbox shaft 1425 is in the range from 3 to 4.5. Preferably, the reduction ratio of the gearbox assembly 142 is 3.9.

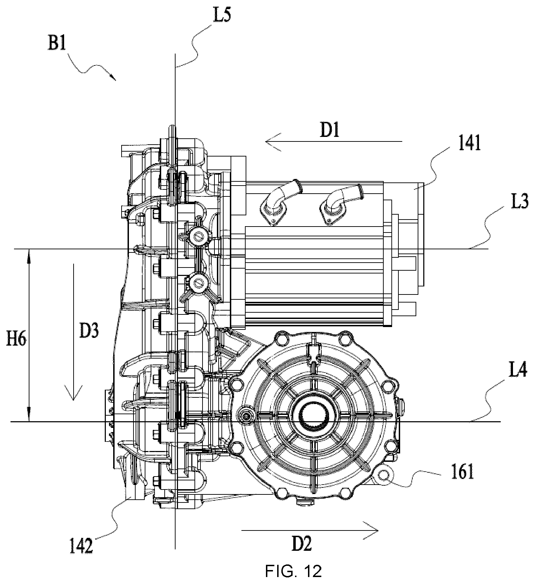

As shown in FIG. 12, a first straight line L3, a second straight line L4, and a third straight line L5 are defined based on the driving force transmission path of the prime mover assembly B1. The driving force between the electric motor assembly 141 and the gearbox assembly 142 is substantially transmitted along an extension direction of the first straight line L3, the driving force between the gearbox assembly 142 and the drive axle assembly 161 is substantially transmitted along an extension direction of the second straight line L4, and the driving force inside the gearbox assembly 142 is substantially transmitted along the direction of the third straight line L5. The axis of the motor output shaft and the axis of the first gearbox shaft 1423 extends substantially along the first straight line L3, and the axis of the third gearbox shaft 1425 extends substantially along the second straight line L4. Furthermore, the first straight line L3 is substantially parallel to the second straight line L4, and the first straight line L3 is substantially perpendicular to the third straight line L5. Furthermore, the distance H6 from the first straight line L3 to the second straight line L4 is in the range from 50 mm to 600 mm. The distance H6 from the first straight line L3 to the second straight line L4 is in the range from 100 mm to 300 mm, which can make the prime mover assembly B1 occupy less space in the up-down direction of the electric all-terrain vehicle 100, thereby further enhancing the integration and compactness of the prime mover assembly B1.

As shown in FIG. 12, in some embodiments, the driving force transmission direction between the electric motor assembly 141 and gearbox assembly 142 is defined as a first direction D1, the driving force transmission direction between the gearbox assembly 142 and drive axle assembly 161 is defined as a second direction D2, and the driving force transmission direction inside the gearbox assembly 142 is defined as a third direction D3. In some alternative embodiments, the first direction D1 and the second direction D2 may be opposite, and the third direction D3 may be substantially perpendicular to the first direction D1. This transmission method can be achieved by setting the electric motor assembly 141 and the drive axle assembly 161 on the side of the gearbox assembly 142 facing the second direction D2. This layout can make the space of prime mover assembly B1 more compact.

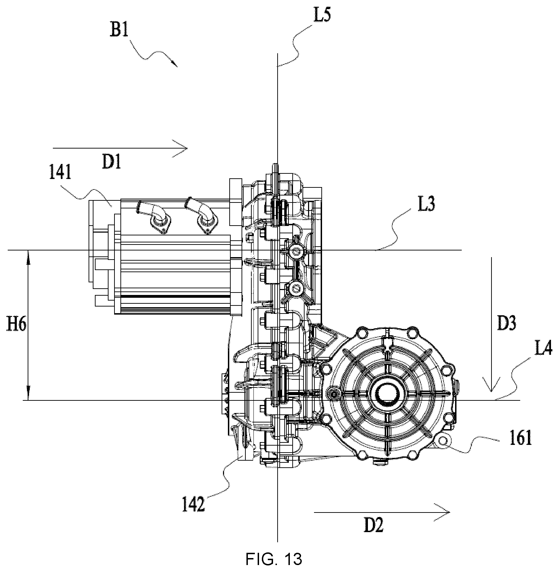

As shown in FIG. 13, in some alternative embodiments, the first direction D1 and the second direction D2 may be substantially same, and the third direction D3 may be substantially perpendicular to the first direction D1. This transmission method can be achieved by setting the electric motor assembly 141 and the drive axle assembly 161 on the opposite side. Alternatively, the first direction D1 may be a forward direction (from rear to front), a rearward direction (from front to rear), or other directions of the electric all-terrain vehicle 100. In the present application, the first direction is a forward direction (a direction from rear to front) of the electric all-terrain vehicle 100, and the third direction is a downward direction (a direction from up to down) of the electric all-terrain vehicle 100. When the first direction D1 is a forward direction the electric all-terrain vehicle 100, which can make the overall layout of the prime mover assembly B1 lean towards the rear of the electric all-terrain vehicle 100, thereby leaving enough assembly space in front of the electric all-terrain vehicle 100.

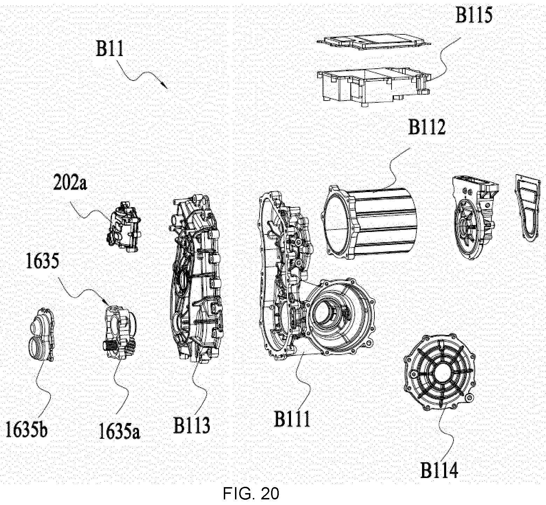

As shown in FIG. 20, the prime mover assembly B1 further includes a housing B11, with the electric motor assembly 141, the gearbox assembly 142, and drive axle assembly 161 all arranged inside the housing B11. Furthermore, the housing B11 of the prime mover assembly B1 includes a housing body B111, a motor housing B112, a gearbox housing B113, and a drive axle housing B114. Alternatively, the motor housing B112 may be an accommodation chamber, and the electric motor assembly 141 is at least partially arranged within the housing B11. The side wall of the electric motor housing B112 defines an accommodation space, the accommodation space at least partially enclosing the accommodation chamber of motor housing B112. Coolant for cooling the electric motor assembly 141 is arranged within the accommodation space. The accommodation space defines a coolant outlet and an inlet coolant for circulating the coolant in the accommodation chamber, thereby facilitating continuous cooling of the electric motor assembly 141. The drive axle housing B114 and the gearbox housing B113 are both cover structures, and the drive axle housing B114, the gearbox housing B113, and motor housing B112 are fixedly connected to the housing body B111, which can provide the electric motor assembly 141, the drive axle assembly 161, and the gearbox assembly 142 with the maximum assembly space and assembly entrance, thereby reducing assembly difficulty. Alternatively, the drive axle housing B114, the gearbox housing B113, and the motor housing B112 are all connected to the housing body B111 by means of bolts. Lubricant is provided inside the housing B11.

Further, in some alternative embodiments, the prime mover assembly B1 may be mounted at the rear end of the electric all-terrain vehicle 100 or at the front end of the electric all-terrain vehicle 100. This embodiment may be used independently, or may be combined with other embodiments in the present application.

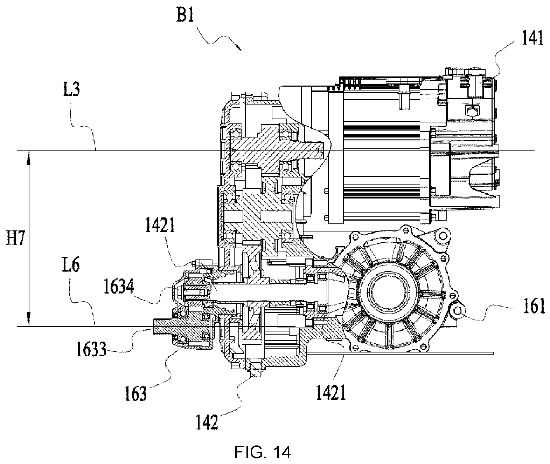

As shown in FIG. 14, in some alternative embodiments, the electric all-terrain vehicle 100 further includes a prime mover assembly B1 including an electric motor assembly 141, a gearbox assembly 142, a drive axle assembly 161, and an offset drive train 163. In this embodiment, the gearbox assembly 142 includes two gearbox output ends 1421 running through the gearbox assembly 142. The drive axle assembly 161 is connected to one of the gearbox output ends 1421, and the offset drive train 163 is connected to the other gearbox output end 1421 on the other side. Alternatively, the electric motor assembly 141 may be arranged on one side of the offset drive train 163 or on one side of drive axle assembly 161. In the present application, the electric motor assembly 141 is arranged on the side away from the offset drive train 163, that is, the electric motor assembly 141 and the drive axle assembly 161 are arranged on the same side, which can make the overall appearance of prime mover assembly B1 more compact, with a more regular shape and easy assembly due to the equal length of the electric motor assembly 141 and the drive axle assembly 161 in the front-rear direction on the electric all-terrain vehicle 100.

In this embodiment, the axis of the first shaft 1633 of the offset drive train 163 extending along a fourth straight line L6. Furthermore, the axis of the second shaft 1634 of the offset drive train 163 extending along a third straight line L5. A distance H7 from the first straight line L3 and the fourth straight line L6 is in the range from 150 mm to 450 mm. Alternatively, the distance H7 from the first straight line L3 to the second straight line L6 is in the range from 80 mm to 900 mm, which can effectively control the overall height of prime mover assembly B1, enhance the integration and compactness of prime mover assembly B1, reduce the layout space on the entire vehicle. In addition, the output direction and position of the prime mover assembly B1 can be changed by the offset drive train 163, which can better adapt to the layout requirements of the electric all-terrain vehicle 100. Furthermore, in this embodiment, the prime mover assembly B1 includes an offset housing 1635 (see FIG. 20), and the offset drive train 163 is at least partially arranged within the offset housing 1635. The offset housing 1635 further includes a first housing portion 1635a and a second housing portion 1635b. The first housing portion 1635a is fixedly connected to the gearbox housing B113, and the second housing portion 1635b is fixedly connected to the first housing portion 1635a, which can not only reasonably arrange the internal components of prime mover assembly B1, control the shape and volume of prime mover assembly B1, increase the convenience of vehicle layout, but also effectively block the heat transfer between the electric motor assembly 141 of prime mover assembly B1 and the second drive axle 1612, thereby avoiding affecting performance, and extending the service life of prime mover assembly B1.

Alternatively, the prime mover assembly B1 may be mounted at the rear end of the electric all-terrain vehicle or at the front end of the electric all-terrain vehicle 100. This embodiment may be used independently, or may be combined with other embodiments in the present application.

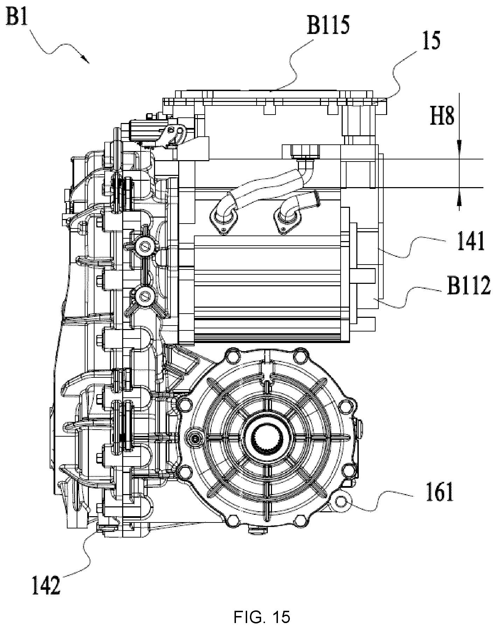

As shown in FIG. 15 and FIG. 20, the prime mover assembly B1of the electric all-terrain vehicle 100 includes the electric motor assembly 141, a Motor Control Unit 15, the gearbox assembly 142, and the drive axle assembly 161. In this embodiment, the housing B11 of the prime mover assembly B1 includes a housing body B111, an electronic control housing B115, a motor housing B112, a gearbox housing B113, and a drive axle housing B114. The electric motor assembly 141, the gearbox assembly 142, and the drive axle assembly 161 are at least partially arranged within the housing body B111. In some alternative embodiments, the motor housing B112, the gearbox housing B113, and the drive axle housing B114 are all fixedly connected to the housing body B111 and the internal accommodation space is connected. The electric motor assembly 141, the gearbox assembly 142, and the drive axle assembly 161 are all arranged inside the housing B11, which can make the housing B11 of prime mover assembly B1 more regular, thereby making it easier to mount and arrange the prime mover assembly B1. Furthermore, the electric control housing B115 may be a separate chamber, and the electric control housing B115 is fixedly connected to the motor housing B112. The electric motor assembly 141 is electrically connected to the electric control assembly 15 through a wiring harness. A gap H8 is defined between the electric control housing B115 and the motor housing B112. When the gap H8 is too small, the heat between the electric motor assembly 141 and the electric control assembly 15 is easily conducted, which reduce the heat dissipation efficiency, and the electric motor assembly 141 also generates electromagnetic interference on the electric control assembly 15, which affects the performance of the electric control assembly 15. However, if the gap H8 is too large, it will cause the prime mover assembly B1 to occupy too much volume, thereby affecting the layout of the entire vehicle. The gap H8 may be in the range from 0 to 80 mm. In this application, the electric control assembly 15, the electric motor assembly 141, and the drive axle assembly 161 are all at least partially arranged on one side of the gearbox assembly 142. That is, when viewed from the up-down direction of the electric all-terrain vehicle 100, at least two of the electric motor assembly 141, the electric control assembly 15, and the drive axle assembly 161 at least partially overlap. This can further achieve the integration and compactness of the prime mover assembly B1, thereby making the prime mover assembly B1 to occupy a smaller mounting space. It should be noted that the motor housing B112 may also be arranged on the opposite side of the drive axle housing B114, and the Motor Control Unit 15 may also be arranged in other directions of the housing B11. The prime mover assembly B1 is integrated to obtain a maximum power per volume. The maximum power of the prime mover assembly B1 is defined as P, and the maximum volume of the prime mover assembly B1 is defined as V1. Alternatively, a ratio of the volume V1 of the prime mover assembly B1 to the power P is in the range from 0.125 cm ³/ W to 0.4 cm ³/ W. Alternatively, the ratio of the volume V1 of the prime mover assembly B1 to the power P is in the range from 0.08 cm ³/ W to 0.8 cm ³/ W. Alternatively, the ratio of the volume V1 of the prime mover assembly B1 to the power P is in the range from 0.16 cm ³/ W to 0.3 cm ³/ W, which can obtain a smaller volume while meeting the driving force of electric all-terrain vehicle 100. That is, the prime mover assembly B1 has a higher power density, which is in line with the lightweight requirements of the all-terrain vehicle 100.

Alternatively, the prime mover assembly B1 may be mounted at the rear end of the electric all-terrain vehicle 100 or at the front end of the electric all-terrain vehicle 100. This embodiment may be used independently, or may be combined with other embodiments in the present application.

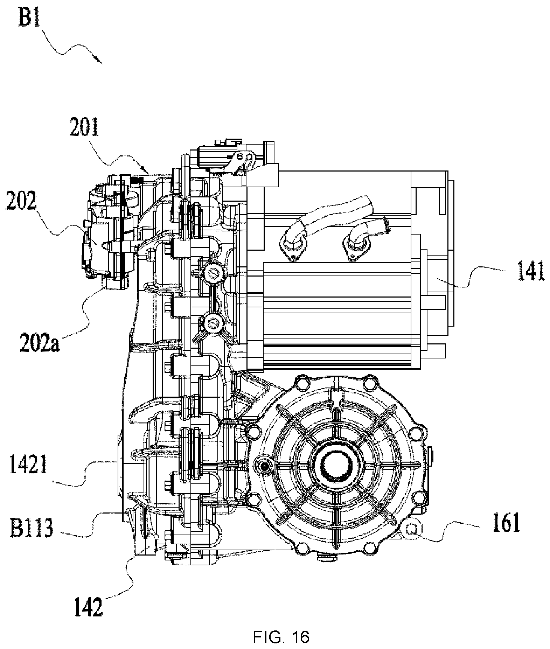

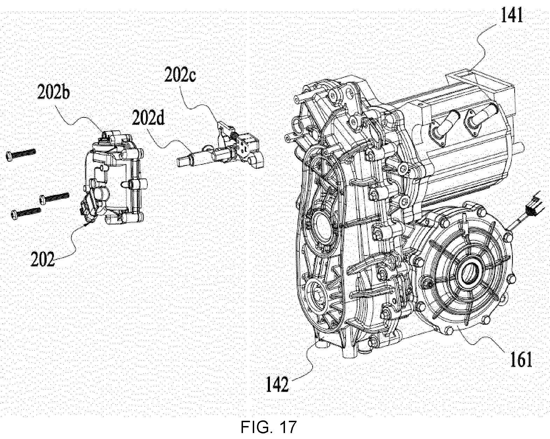

As shown in FIG. 16 and FIG. 17, the electric all-terrain vehicle 100 further includes a braking system 20, which includes a service braking assembly and a parking and brake assembly 201. The parking and brake assembly 201 includes a brake execution module 202 and a brake control module. The brake control module includes a parking button and an "VCU" Motor Control Unit 15. That is, the control function of the parking and brake assembly 201 and the control of the electric motor assembly 141 are both integrated into the "VCU" Motor Control Unit 15. The parking button is electrically connected to the VCU" Motor Control Unit 15. Furthermore, the "VCU" Motor Control Unit 15 is electrically connected to the parking execution module 202. When the driver inputs an electrical signal to the "VCU" Motor Control Unit 15 by operating the parking button, the "VCU" Motor Control Unit 15 then sends an electrical signal to the parking execution module 202, and the parking execution module 202 to send corresponding instructions and execute the parking operation.

Alternatively, the electric all-terrain vehicle 100 further includes a prime mover assembly B1 including an electric motor assembly 141, a gearbox assembly 142, a drive axle assembly 161, and a parking execution module 202. The parking execution module 202 may be arranged on the side of the gearbox assembly 142 away from the electric motor assembly 141, and the brake execution module 202 includes a parking and brake motor 202b and a parking brake caliper 202c. Furthermore, the brake execution module 202 further includes a parking brake shaft 202d, one end of which is connected to the parking brake caliper 202c, and the other end of which is connected to the parking and brake motor 202b. The parking and brake motor 202b is capable of transmitting the driving force of the parking and brake to the parking brake caliper 202c by the parking brake shaft 202d, so that the parking brake caliper 202c can lock or disengage with any reduction gear in the gearbox assembly 142 under the control of the parking motor, and thus achieve the opening and closing of the parking and brake function.

As shown in FIG. 20, the parking execution module 202 includes a parking housing 202a, a parking brake motor 202b, and a parking brake shaft 202d at least partially located within the parking housing 202a. The parking brake shaft 202d and the parking brake caliper 202c are at least partially located within the gearbox housing B113. Alternatively, the edge of the parking housing 202a does not exceeds the contour of the gearbox housing B113. That is, a projection of the parking housing 202a at least partially overlaps with a projection of the gearbox housing B113 on a plane perpendicular to the driving force output shaft of the electric motor assembly 141. Alternatively, the projection of the gearbox housing B113 completely coincide with the projection of the parking housing 202a on the plane perpendicular to the motor output shaft. It should be noted that in this embodiment, when viewed in a direction perpendicular to the motor output shaft, at least two of the electric motor assembly 141, the gearbox assembly 142, and the parking execution module 202 at least partially overlap. The parking execution module 202 is positioned on the side of the gearbox assembly 142 away from the drive axle assembly 161, and is at least partially positioned on the upper side of the gearbox output end 1421. When viewed along the driving force transmission direction within the gearbox assembly, the parking execution module 202 at least partially overlap with the gearbox output end 1421, which can enable the parking execution module 202 to be on the smallest width portion of the gearbox housing B113, thereby effectively controlling the total volume and appearance of the prime mover assembly B1 and enabling the prime mover assembly B1 to have parking and brake function, making the functionality of the prime mover assembly B1 more integrated and further improving the compactness. In this application, the parking housing 202a is fixedly connected to the gearbox housing B113, and the internal accommodation space between the parking housing 202a and the gearbox housing B113 is at least partially connected. Alternatively, the parking housing 202a is fixedly connected to the gearbox housing B113 by means of bolts.

It should be noted that the parking execution module 202 may also be arranged on other end faces of the gearbox assembly 142, and the parking brake caliper 202c may lock or disengage from any of the first gearbox shaft 1423, the second gearbox shaft 1424, the third gearbox shaft 1425, and the motor output shaft. In other embodiments, the parking execution module 202 may also be arranged in the drive axle assembly 161 or a differential structure, which are within the scope of protection of the present invention as long as the parking and brake function of prime mover assembly B1 and the high integration of prime mover assembly B1 are realized.

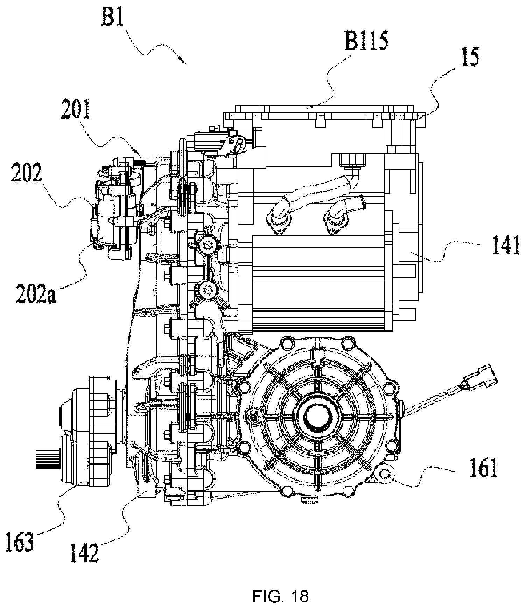

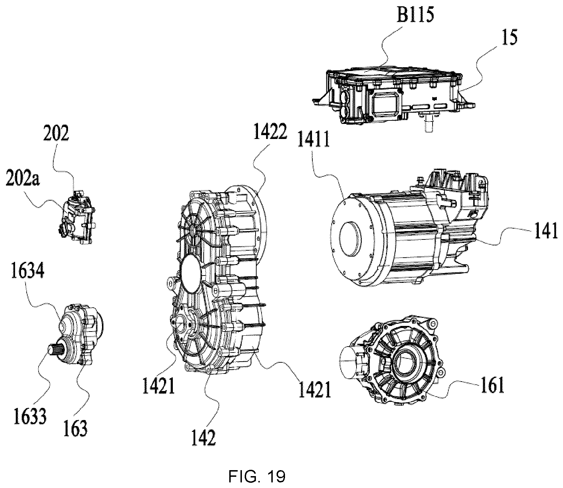

As shown in FIG. 11 to FIG. 20, in some alternative embodiments, the assemblies of the prime mover assembly B1 may be selected according to the requirements of electric all-terrain vehicle 100. That is, the prime mover assembly B1 may include an electric motor assembly 141, a gearbox assembly 142, a drive axle assembly 161, an offset drive train 163, and a Motor Control Unit 15, which can simultaneously control the output power, output direction, and output position of the driving force of the prime mover assembly B1, thereby facilitating the layout of the drive train of the electric all-terrain vehicle 100. In some alternative embodiments, the prime mover assembly B1 may include an electric motor assembly 141, a gearbox assembly 142, a drive axle assembly 161, an offset drive train 163, and a parking execution module 202. The prime mover assembly B1 can effectively integrate functions of parking and brake function and changing the transmission direction and position of driving force. It should be noted that the prime mover assembly B1 may include an electric motor assembly 141, a gearbox assembly 142, a drive axle assembly 161, a parking execution module 202, and a Motor Control Unit 15. Both the parking execution module 202 and the Motor Control Unit 15 are integrated and arranged as a portion of the prime mover assembly B1. The distance between the Motor Control Unit 15, which serves as the parking control module, and the parking execution module 202 is the shortest, and the electrical connection path between the parking control module and parking execution module 202 is the farthest, which can further achieve the integration of parking and brake function when integrating the prime mover assembly B1. Alternatively, the prime mover assembly B1 may include a Motor Control Unit 15, an electric motor assembly 141, a gearbox assembly 142, a drive axle assembly 161, an offset drive train 163, and a parking execution module 202. In this embodiment, the prime mover assembly B1 has the highest integration and compactness, which can effectively achieve the compactness of the vehicle layout and further reduce the difficulty and cost of vehicle assembly under the premise of industrialization. The interconnection and relative position relationship between the prime mover assembly B1 in any of the above embodiments, including the Motor Control Unit 15, electric motor assembly 141, gearbox assembly 142, drive axle assembly 161, offset drive train 163, and parking execution module 202, are as described above and will not be repeated here.

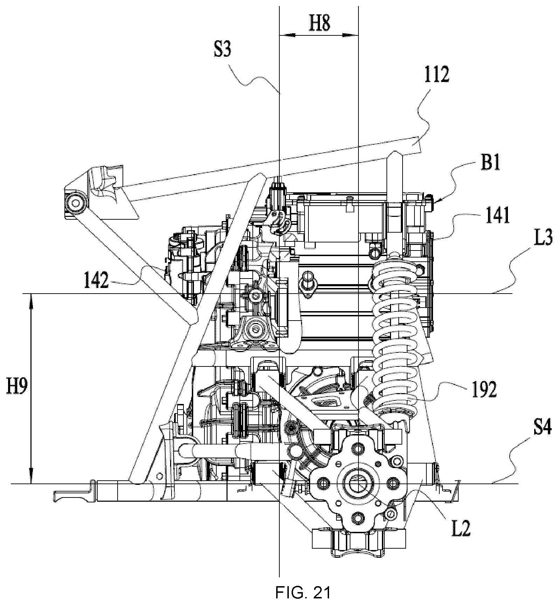

As shown in FIG. 21, in some alternative embodiments, the prime mover assembly B1 may be mounted on the second frame assembly 112. The vehicle cover 12 further includes a seat cushion 121. Alternatively, the prime mover assembly B1 may be at least partially positioned below the seat cushion 121 (see FIG. 3). The electric all-terrain vehicle 100 further includes a rear suspension 192. Alternatively, the prime mover assembly B1 is at least partially positioned on one side of the rear suspension 192. The prime mover assembly B1 may be at least partially positioned between the two buffers of the rear suspension 192, and when viewed along the left-right direction of the electric all-terrain vehicle 100, the two buffers of the rear suspension 192 at least partially overlap with the prime mover assembly B1. As mentioned earlier, the prime mover assembly B1 includes at least an electric motor assembly 141 and a gearbox assembly 142. The electric motor assembly 141 further includes a motor output end face S3, which is perpendicular to the first straight line L3, and the motor output end face S3 is substantially at one end adjacent to the gearbox assembly 142 on the motor housing B112. Alternatively, the motor output end face S3 is defined on the connection surface between the electric motor assembly 141 and the gearbox assembly 142. In this application, the driving force output direction of the electric motor assembly 141 extends substantially along the front-rear direction of the electric all-terrain vehicle 100, that is, the first straight line L3 is perpendicular to the centerline of the first wheel axle 1311 and/or the second wheel axle 1312, and further, the motor output end face S3 is substantially parallel to the centerline L2 of the second wheel axle. Alternatively, the motor output end face S3 is at least partially positioned behind the second wheel axle 1312. Further, the distance H8 from the motor output end face S3 to the centerline L2 of the second wheel axle may be in the range from 50 mm to 200 mm. The distance H8 from the motor output end face S3 to the centerline L2 of the second wheel shaft may be in the range from 0 mm to 400 mm, which can make the prime mover assembly B1 relatively positioned at the rear end of the electric all-terrain vehicle 100, thereby effectively controlling the output position of the driving force of the electric all-terrain vehicle 100. It should be noted that in some other embodiments, the motor output end face S3 may also be at least partially positioned at the front end of the second wheel axle. The electric all-terrain vehicle 100 further defines a wheel axle plane 103 passing through the rotation centers of a pair of front wheels 131 and a pair of rear wheels 132. Alternatively, the distance H9 from the first straight line L3 to the wheel axle plane 103 may be in the range from 100 mm to 500 mm, which causes the position of the prime mover assembly B1 to be backward lower, thereby providing more sufficient assembly space for the front end of the electric all-terrain vehicle 100 and effectively lowering the center of gravity of the electric all-terrain vehicle 100. When the electric all-terrain vehicle 100 is rear wheel-drive, the distance from the electric connection and transmission connection between the prime mover assembly B1 and the driving wheels is the shortest, which can effectively reduce costs.

The prime mover assembly B1 in this embodiment may further include one or more of the group consisting of the Motor Control Unit 15, the drive axle assembly 161, and parking execution modules 202. This embodiment may be used independently, or may be combined with other embodiments in the present application.

As mentioned above, the prime mover assembly B1 may include an offset drive train 163, and the distance H9 between the first straight line L3 and the wheel axle plane 103 may be in the range from 50 mm to 900 mm. It should be noted that due to the integration of the prime mover assembly B1 with an offset drive train 163, the offset drive train 163 can change the output direction of the driving force of the electric motor assembly 141 in any direction. Therefore, the layout of the electric motor assembly 141 in the up-down direction of the electric all-terrain vehicle 100 is more flexible, and the range of the distance H9 can be larger.

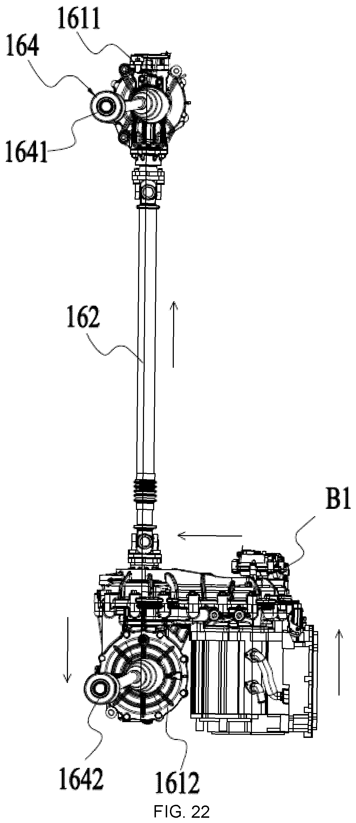

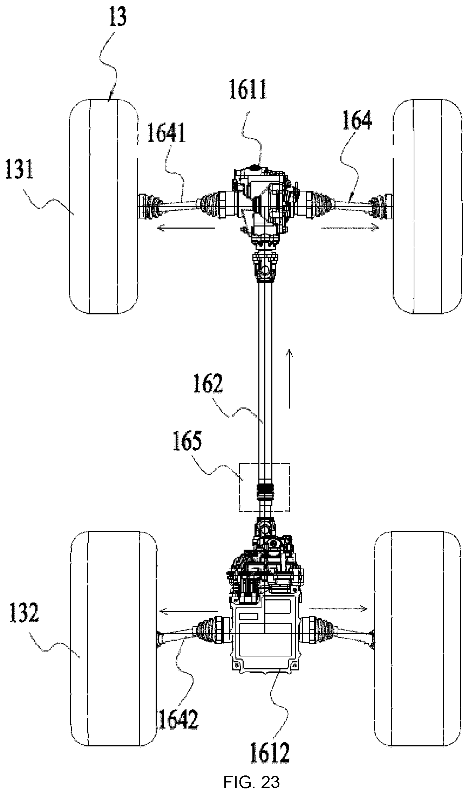

As shown in FIG. 22 and FIG. 23, the drive system 14 is the source of driving force for the electric all-terrain vehicle 100. The driving force generated by the drive system 14 is ultimately transmitted to the set of wheels 13 of the electric all-terrain vehicle 100, thereby providing a power source for the movement of the electric all-terrain vehicle 100. Furthermore, the electric all-terrain vehicle 100 further includes a half axle assembly 164, which includes a pair of first half axles 1641 connected to the first drive axle 1611 and a pair of second half axles 1642 connected to the second drive axle 1612. The second half axle 1642 is positioned between the second drive axle 1612 and the rear wheels 132, and can further transmit the driving force of the second drive axle 1612 to the rear wheel 132. Furthermore, the drive system 14 is at least partially connected to the drive shaft 162, thereby transmitting the driving force generated by the drive system 14 to the drive shaft 162, and further transmitting the driving force to the first drive axle 1611 by the drive shaft 162. The first half axle 1641 is positioned between the first drive axle 1611 and the front wheels 131, and can further transmit the driving force of the first drive axle 1611 to the front wheel 131. That is, the electric all-terrain vehicle 100 defines a first transmission path and a second transmission path for transmitting the driving force generated by the drive system 14. The driving force from the drive system 14 is transmitted to the first drive axle 1611 by the drive shaft 162 and then transmitted to the set of wheels 13 on the first wheel axle 1311 by the first half shaft 1641 by means of the first transmission path. The driving force is transmitted from the drive system 14 to the second drive axle 1611 by the drive shaft 162, and then transmitted to the set of wheels 13 on the second wheel axle 1311 by the second half shaft 1641 by means of the second transmission path. As mentioned above, the drive system 14 and the second drive axle 1612 can be integrated, and the drive system 16 includes a gearbox assembly 142 and an electric motor assembly 141. When the gearbox assembly 142, the electric motor assembly 141, and the second drive axle 1612 are highly integrated into the prime mover assembly B1, the route range of the second transmission path is the shortest.

The electric all-terrain vehicle 100 further includes a connection assembly 165 at least partially mounted on the first transmission path and/or the second transmission path, that is, the connection assembly 165 is at least partially connected to the drive train 16. In some embodiments, the connection assembly 165 may be arranged between the drive system 14 and the drive shaft 162, that is, one end of the connection assembly 165 is connected to the drive system 14, and the other end of the connection assembly 165 is connected to the drive shaft 162, the interruption or continuation of driving force transmission between the drive system 14 and the drive shaft 162 can be achieved, which can avoid the drive shaft 162 rotating under the drive system 14 after the connection assembly 165 is started, thereby effectively reducing energy loss. It should be noted that the connection assembly 165 may be arranged between the drive shaft 162 and the drive axle assembly 161, and the interruption of driving force transmission between the drive shaft 162 and the drive axle assembly 161 can be achieved by starting and closing the connection assembly 165, which can effectively integrate the connection assembly 165 within the drive axle assembly 161, thereby reducing the weight of the entire vehicle and lowering assembly and maintenance costs of the electric all-terrain vehicle 100.

Alternatively, the connection assembly 165 may be arranged between the half axle assembly 164 and the drive axle assembly 161, which can not only be integrated with the drive axle assembly 161, but also be integrated with the differential function of the differential of the drive axle assembly 161. It can achieve more functions in limited components, in line with the development mode of integration in the field of electric all-terrain vehicles 100. The connection component 165 is always at least partially arranged on the first transmission path and the second transmission path, and the first transmission path and/or second transmission path can be disconnected by activating the connection assembly 165 and can be connected to the first transmission path and/or second transmission path by closing the braking mechanism 20. The electric all-terrain vehicle 100 includes a first state and a second state. When the electric all-terrain vehicle 100 is in the first state, the connection assembly 165 is in a working state, and both the first transmission path and the second transmission path are connected. At this point, the electric all-terrain vehicle 100 includes two driving force transmission paths. The front wheels 131 and the rear wheels 132 of the electric all-terrain vehicle 100 are both in power state. In this state, the electric all-terrain vehicle 100 can have stronger driving force and adapt to more extreme driving environments. When the electric all-terrain vehicle 100 is in the second state, the connection assembly 165 starts and disconnects the first transmission or second transmission path. At this time, the driving force of the electric all-terrain vehicle 100 only has one transmission path. That is, only the front wheels 131 or only the rear wheels 132 has power, and the other set of wheels 13 can only move under the drive. In this state, the electric all-terrain vehicle 100 only needs to drive only the front wheels 131 or only the rear wheels 132, so the demand for energy consumption is lower, which is conducive to the rational allocation of energy for battery pack 17. This state is applicable to electric all-terrain vehicle 100 in relatively smooth road conditions, for road conditions with low demand for driving force. Further, the connection assembly 165 further includes an operator arranged in the cockpit of the electric all-terrain vehicle 100. Further, the operator is electrically connected to the connection assembly 165, and the starting and closing of the connection assembly 165 can be achieved by manual operation of the operator. Alternatively, the connection assembly 165 is a transfer case, and the two ends of the transfer case are connected to the drive axle assembly 161, the drive system 14, or the drive shaft 162 by splines. After the driver operates the operator, the transfer case can translate under the action of the driving force, thereby disconnecting from the drive axle assembly 161, the drive system 14, or the drive shaft 162, and achieving the interruption of driving force transmission. Similarly, it is possible to re-connect the drive axle assembly 161, the drive system 14, or the drive shaft 162 and to achieve the transmission of driving force by operating the transfer case again.

In the description of this application, "fixedly connected" is limited to a non-pivot connection method, that is, the two components set as fixed connections cannot undergo relative displacement or relative rotation in the connected state. The length of the axle is limited to the line connecting the rotation centers of two front wheels and/or two rear wheels. Furthermore, the rotation center of the set of wheels is limited to the center point of the rotation axis of the set of wheels.

The above-mentioned embodiments only represent several embodiments of the present invention, and the descriptions thereof are relatively specific and detailed, but should not be construed as a limitation to the scope. Workers of ordinary skill in the art may make numerous modifications and improvements without departing from the concepts of the present invention. Therefore, the protection scope of the patent of the present invention is defined to include the full breadth of the appended claims.

## Claims

1. An electric all-terrain vehicle (100) comprising
a frame (11);
a vehicle cover (12) at least partially arranged on the frame (11);
a set of wheels (13) comprising a first wheel axle (1311) and a second wheel axle (1312) at least partially arranged on the frame (11);
a drive system (14) comprising an electric motor assembly (141);
a battery pack (17) providing electric energy for the electric all-terrain vehicle (100); and
a Motor Control Unit (15) at least partially electrically connected to the electric motor assembly (141);
wherein, the battery pack (17), the electric motor assembly (141) and the Motor Control Unit (15) are distributed substantially along a front-rear direction of the electric all-terrain vehicle (100), a projection of the Motor Control Unit (15), a projection of the battery pack (17), and a projection of the electric motor assembly (141) all on a plane perpendicular to an up-down direction of the vehicle cooperatively define a Tri-core system projection area, a maximum length occupied by the Tri-core system projection area along the front-rear direction of the vehicle is defined as a Tri-core longitudinal length, a projection of a first wheel axle centerline on the plane perpendicular to the up-down direction of the vehicle is defined as a first projection line, and a projection of a second wheel axle centerline on the plane perpendicular to the up-down direction of the vehicle is defined as a second projection line, **characterized in that**,
a distance between the first projection line and the second projection line is defined as a wheelbase distance, a ratio of the wheelbase distance to the Tri-core longitudinal length is in the range from 0.7 to 2.5;
wherein, the electric all-terrain vehicle (100) further comprises a prime mover assembly (B1) comprising the electric motor assembly (141), a gearbox assembly (142), a drive axle assembly (161), and a offset drive train (163); the electric motor assembly (141), the drive axle assembly (161) and the offset drive train (163) being all arranged at least partially on the gearbox assembly (142); the gearbox assembly (142) comprising a gearbox shaft, and the offset drive train (163) comprising a first shaft (1633), the first shaft (1633) and the gearbox shaft being connected together in a transmission mode, the electric motor assembly (141) transmitting a driving force to the gearbox assembly (142) by the gearbox shaft, and the gearbox assembly (142) transmitting the driving force to the offset drive train (163); a centerline of the gearbox shaft extending substantially along a first straight line (L3), and a centerline of the first shaft (1633) extending substantially along a second straight line (L4), and a distance from the first straight line (L3) to the second straight line (L4) being in the range from 80 mm to 900 mm.

2. The electric all-terrain vehicle (100) of claim 1, wherein the ratio of the wheelbase distance to the Tri-core longitudinal length is in the range from 0.9 to 2.0.

3. The electric all-terrain vehicle (100) of claim 1, wherein a distance from an edge of the Tri-core system projection area adjacent to the first projection line to the first projection line is in the range from 0 mm to 1500 mm, and a distance from an edge of the Tri-core system projection area adjacent to the second projection line to the second projection line is in the range from 0 mm to 1500 mm.

4. The electric all-terrain vehicle (100) of claim 1, wherein at least two projections of a projection of the battery pack (17), a projection of the Motor Control Unit (15), and a projection of the electric motor assembly (141) all on a plane perpendicular to a front-rear direction of the vehicle at least partially overlap; the Motor Control Unit (15) is positioned between the battery pack (17) and the electric motor assembly (141), with a shortest side length of the electric motor assembly (141) extending substantially along the front-rear direction of the electric all-terrain vehicle (100).

5. The electric all-terrain vehicle (100) of claim 1, wherein at least two projections of a projection of the Motor Control Unit (15), a projection of the battery pack (17), and a projection of the electric motor assembly (141) projected on a plane perpendicular to an up-down direction of the vehicle at least partially overlap; the Motor Control Unit (15) is mounted at least partially above the battery pack (17) and/or the electric motor assembly (141).

6. The electric all-terrain vehicle (100) of claim 1, wherein a projection of the battery pack (17) at least partially overlaps with a projection of the electric motor assembly (141) on the plane perpendicular to the front-rear direction of the vehicle; a projection of the Motor Control Unit (15) at least partially overlaps with a projection of the battery pack (17) /the electric motor assembly (141) on the plane perpendicular to the up-down direction of the electric all-terrain vehicle (100); the battery pack (17) is mounted at least partially in front of the electric motor assembly (141), and the Motor Control Unit (15) is mounted at least partially above the electric motor assembly (141) and/or the battery pack (17).

7. The electric all-terrain vehicle (100) of claim 1, wherein the electric all-terrain vehicle (100) defines a longitudinal mid-plane (S2) perpendicular to a left-right direction of the electric all-terrain vehicle (100), and the electric all-terrain vehicle (100) is substantially symmetrical with respect to the longitudinal mid-plane (S2); and the longitudinal mid-plane (S2) at least partially intersects all of the battery pack (17), the Motor Control Unit (15) and the electric motor assembly (141).

8. The electric all-terrain vehicle (100) of claim 1, wherein the electric motor assembly (141), the battery pack (17) and the Motor Control Unit (15) are distributed substantially along a front-rear direction of the electric all-terrain vehicle; at least two projections of a projection of the battery pack, a projection of the electric motor assembly (141), and a projection of the Motor Control Unit (15) on a plane perpendicular to a front-rear direction of the vehicle at least partially overlap; the projection area of the battery pack, the electric motor assembly (141), and the Motor Control Unit (15) projected on the plane perpendicular to the front-rear direction of the electric all-terrain vehicle (100) is defined as a maximum projection area, the overlapping area of any two of the battery pack, the electric motor assembly (141), and the Motor Control Unit (15) projected on the plane perpendicular to the front-rear direction of the electric all-terrain vehicle (100) is defined as a projection overlapping area, and a ratio of the maximum projection area to the projection overlapping area is in the range from 0.4 to 1.0; the Motor Control Unit (15) is positioned between the battery pack (17) and the electric motor assembly (141), with a shortest side length of the electric motor assembly (141) extending substantially along the front-rear direction of the electric all-terrain vehicle (100).

9. The electric all-terrain vehicle (100) of claim 8, wherein the electric all-terrain vehicle (100) defines a longitudinal mid-plane (S2) perpendicular to a left-right direction of the electric all-terrain vehicle, and the electric all-terrain vehicle (100) is substantially symmetrical with respect to the longitudinal mid-plane; and the longitudinal mid-plane (S2) at least partially intersects all of the battery pack (17), the Motor Control Unit (15) and the electric motor assembly (141).

10. The electric all-terrain vehicle (100) of claim 1, wherein the gearbox assembly (142) comprises a first gearbox shaft (1423) and a second gearbox shaft (1424), the first gearbox shaft (1423) and the second gearbox shaft (1424) are connected together in a transmission mode, and a ratio of a rotational speed of the first gearbox shaft (1423) to a rotational speed of the second gearbox shaft (1424) is in the range from 3 to 4.5; the offset drive train (163) comprises a second shaft, the first shaft (1633) and the second shaft (1634) are connected together in a transmission mode, and the second shaft (1634) and the second gearbox shaft (1424) are connected together in a transmission mode.

11. The electric all-terrain vehicle (100) of claim 1, wherein the distance from the first straight line to the second straight line is in the range from 150 mm to 450 mm, a second shaft centerline extends substantially along a second straight line, and a distance from the second straight line to the first straight line is in the range from 50 mm to 600 mm.

12. The electric all-terrain vehicle (100) of claim 1, wherein the electric motor assembly (141) and the drive axle assembly (161) are mounted on the same side of the gearbox assembly (142), and the offset drive train (163) is mounted on the side of the gearbox assembly (142) away from the electric motor assembly (141).

13. The electric all-terrain vehicle (100) of claim 1, wherein the prime mover assembly (B1) comprises a housing (B11) defining an accommodation space, the electric motor assembly (141), the gearbox assembly (142), the drive axle assembly and the offset drive train (163) are at least partially arranged in the accommodation space; the housing (B11) comprises a housing body (B111), an electric motor housing (B112), a gearbox housing (B113), a drive axle housing (B114) and an offset housing (1635); the electric motor assembly (141), the gearbox assembly (142) and the drive axle assembly (161) are at least partially arranged in the housing body (B111).

14. The electric all-terrain vehicle (100) of claim 1, wherein a transmission direction of the driving force from the electric motor assembly (141) to the gearbox assembly (142) is substantially the same as a transmission direction of the driving force output from the offset drive train (163) outputting to the outside of the prime mover assembly (B1).

15. The electric all-terrain vehicle (100) of claim 13, wherein the offset housing (1635) is fixedly connected to the housing body (B111), and the offset housing (1635) comprises a first portion (1635a) and a second portion (1635b), one end of the first portion (1635a) is fixedly connected to the gearbox assembly (142), and the other end of the first portion (1635a) is fixedly connected to the second portion (1635b).

## Patentansprüche

1. Ein elektrisch angetriebenes Geländefahrzeug (100), umfassend einen Rahmen (11);
eine Karosserieabdeckung (12), die zumindest teilweise auf dem Rahmen (11) angeordnet ist;
einen Radsatz (13), der eine erste Radachse (1311) und eine zweite Radachse (1312) umfasst, die zumindest teilweise auf dem Rahmen (11) angeordnet sind;
ein Antriebssystem (14), das eine Elektromotoranordnung (141) umfasst;
einen Akkupack (17), der elektrische Energie für das elektrisch angetriebene Geländefahrzeug (100) bereitstellt; und
eine Motorsteuerungseinheit (15), die zumindest teilweise elektrisch mit der Elektromotoranordnung (141) verbunden ist;
wobei der Akkupack (17), die Elektromotoranordnung (141) und die Motorsteuerungseinheit (15) im Wesentlichen entlang einer Vorder-Hinter-Richtung des elektrisch angetriebenen Geländefahrzeugs (100) verteilt sind, eine Projektion der Motorsteuerungseinheit (15), eine Projektion des Akkupacks (17) und eine Projektion der Elektromotoranordnung (141) jeweils auf einer Ebene senkrecht zu einer Oben-Unten-Richtung des Fahrzeugs gemeinsam eine Tri-Core-System-Projektionsfläche definieren, eine maximale Länge, die von der Tri-Core-System-Projektionsfläche entlang der Vorder-Hinter-Richtung des Fahrzeugs eingenommen wird, als eine Tri-Core-Längslänge definiert ist, eine Projektion einer Mittellinie der ersten Radachse auf die Ebene senkrecht zu der Oben-Unten-Richtung des Fahrzeugs als eine erste Projektionslinie definiert ist, und eine Projektion einer Mittellinie der zweiten Radachse auf die Ebene senkrecht zu der Oben-Unten-Richtung des Fahrzeugs als eine zweite Projektionslinie definiert ist, **dadurch gekennzeichnet, dass**,
ein Abstand zwischen der ersten Projektionslinie und der zweiten Projektionslinie als ein Radstandsabstand definiert ist, ein Verhältnis des Radstandsabstands zu der Tri-Core-Längslänge in dem Bereich von 0,7 bis 2,5 liegt;
wobei das elektrisch angetriebene Geländefahrzeug (100) ferner eine Antriebsaggregatanordnung (B1) umfasst, die die Elektromotoranordnung (141), eine Getriebeanordnung (142), eine Antriebsachsenanordnung (161) und einen versetzten Antriebsstrang (163) umfasst; wobei die Elektromotoranordnung (141), die Antriebsachsenanordnung (161) und der versetzte Antriebsstrang (163) alle zumindest teilweise auf der Getriebeanordnung (142) angeordnet sind; wobei die Getriebeanordnung (142) eine Getriebewelle umfasst und der versetzte Antriebsstrang (163) eine erste Welle (1633) umfasst, wobei die erste Welle (1633) und die Getriebewelle in einer Übertragungsweise miteinander verbunden sind, die Elektromotoranordnung (141) über die Getriebewelle eine Antriebskraft an die Getriebeanordnung (142) überträgt, und die Getriebeanordnung (142) die Antriebskraft an den versetzten Antriebsstrang (163) überträgt; wobei sich eine Mittellinie der Getriebewelle im Wesentlichen entlang einer ersten Gerade (L3) erstreckt und sich eine Mittellinie der ersten Welle (1633) im Wesentlichen entlang einer zweiten Gerade (L4) erstreckt, und ein Abstand von der ersten Gerade (L3) zu der zweiten Gerade (L4) in dem Bereich von 80 mm bis 900 mm liegt.

2. Das elektrisch angetriebene Geländefahrzeug (100) nach Anspruch 1, wobei das Verhältnis des Radstandsabstands zu der Tri-Core-Längslänge in dem Bereich von 0,9 bis 2,0 liegt.

3. Das elektrisch angetriebene Geländefahrzeug (100) nach Anspruch 1, wobei ein Abstand von einem Rand der Tri-Core-System-Projektionsfläche, der an die erste Projektionslinie angrenzt, zu der ersten Projektionslinie in dem Bereich von 0 mm bis 1500 mm liegt, und ein Abstand von einem Rand der Tri-Core-System-Projektionsfläche, der an die zweite Projektionslinie angrenzt, zu der zweiten Projektionslinie in dem Bereich von 0 mm bis 1500 mm liegt.

4. Das elektrisch angetriebene Geländefahrzeug (100) nach Anspruch 1, wobei sich zumindest zwei Projektionen aus einer Projektion des Akkupacks (17), einer Projektion der Motorsteuerungseinheit (15) und einer Projektion der Elektromotoranordnung (141) jeweils auf einer Ebene senkrecht zu einer Vorder-Hinter-Richtung des Fahrzeugs zumindest teilweise überlappen; wobei die Motorsteuerungseinheit (15) zwischen dem Akkupack (17) und der Elektromotoranordnung (141) angeordnet ist, wobei sich eine kürzeste Seitenlänge der Elektromotoranordnung (141) im Wesentlichen entlang der Vorder-Hinter-Richtung des elektrisch angetriebenen Geländefahrzeugs (100) erstreckt.

5. Das elektrisch angetriebene Geländefahrzeug (100) nach Anspruch 1, wobei sich zumindest zwei Projektionen aus einer Projektion der Motorsteuerungseinheit (15), einer Projektion des Akkupacks (17) und einer Projektion der Elektromotoranordnung (141), projiziert auf eine Ebene senkrecht zu einer Oben-Unten-Richtung des Fahrzeugs, zumindest teilweise überlappen; wobei die Motorsteuerungseinheit (15) zumindest teilweise oberhalb des Akkupacks (17) und/oder der Elektromotoranordnung (141) montiert ist.

6. Das elektrisch angetriebene Geländefahrzeug (100) nach Anspruch 1, wobei sich eine Projektion des Akkupacks (17) zumindest teilweise mit einer Projektion der Elektromotoranordnung (141) auf der Ebene senkrecht zu der Vorder-Hinter-Richtung des Fahrzeugs überlappt; wobei sich eine Projektion der Motorsteuerungseinheit (15) zumindest teilweise mit einer Projektion des Akkupacks (17) / der Elektromotoranordnung (141) auf der Ebene senkrecht zu der Oben-Unten-Richtung des elektrisch angetriebenen Geländefahrzeugs (100) überlappt; wobei der Akkupack (17) zumindest teilweise vor der Elektromotoranordnung (141) montiert ist, und die Motorsteuerungseinheit (15) zumindest teilweise oberhalb der Elektromotoranordnung (141) und/oder des Akkupacks (17) montiert ist.

7. Das elektrisch angetriebene Geländefahrzeug (100) nach Anspruch 1, wobei das elektrisch angetriebene Geländefahrzeug (100) eine Längsmittelebene (S2) definiert, die senkrecht zu einer Links-Rechts-Richtung des elektrisch angetriebenen Geländefahrzeugs (100) ist, und das elektrisch angetriebene Geländefahrzeug (100) im Wesentlichen symmetrisch in Bezug auf die Längsmittelebene (S2) ist; und wobei die Längsmittelebene (S2) alle des Akkupacks (17), der Motorsteuerungseinheit (15) und der Elektromotoranordnung (141) zumindest teilweise schneidet.

8. Das elektrisch angetriebene Geländefahrzeug (100) nach Anspruch 1, wobei die Elektromotoranordnung (141), der Akkupack (17) und die Motorsteuerungseinheit (15) im Wesentlichen entlang einer Vorder-Hinter-Richtung des elektrisch angetriebenen Geländefahrzeugs verteilt sind; wobei sich zumindest zwei Projektionen aus einer Projektion des Akkupacks, einer Projektion der Elektromotoranordnung (141) und einer Projektion der Motorsteuerungseinheit (15) auf eine Ebene senkrecht zu einer Vorder-Hinter-Richtung des Fahrzeugs zumindest teilweise überlappen; wobei die Projektionfläche des Akkupacks, der Elektromotoranordnung (141) und der Motorsteuerungseinheit (15), projiziert auf die Ebene senkrecht zu der Vorder-Hinter-Richtung des elektrisch angetriebenen Geländefahrzeugs (100), als eine maximale Projektionsfläche definiert ist, die Überlappungsfläche einer Projektion beliebiger zweier aus dem Akkupack, der Elektromotoranordnung (141) und der Motorsteuerungseinheit (15), projiziert auf die Ebene senkrecht zu der Vorder-Hinter-Richtung des elektrisch angetriebenen Geländefahrzeugs (100), als eine Projektionsüberlappungsfläche definiert ist, und ein Verhältnis der maximalen Projektionsfläche zu der Projektionsüberlappungsfläche in dem Bereich von 0,4 bis 1,0 liegt; wobei die Motorsteuerungseinheit (15) zwischen dem Akkupack (17) und der Elektromotoranordnung (141) angeordnet ist, wobei sich eine kürzeste Seitenlänge der Elektromotoranordnung (141) im Wesentlichen entlang der Vorder-Hinter-Richtung des elektrisch angetriebenen Geländefahrzeugs (100) erstreckt.

9. Das elektrisch angetriebene Geländefahrzeug (100) nach Anspruch 8, wobei das elektrisch angetriebene Geländefahrzeug (100) eine Längsmittelebene (S2) definiert, die senkrecht zu einer Links-Rechts-Richtung des elektrisch angetriebenen Geländefahrzeugs ist, und das elektrisch angetriebene Geländefahrzeug im Wesentlichen symmetrisch in Bezug auf die Längsmittelebene ist; und wobei die Längsmittelebene (S2) alle aus dem Akkupack (17), der Motorsteuerungseinheit (15) und der Elektromotoranordnung (141) zumindest teilweise schneidet.

10. Das elektrisch angetriebene Geländefahrzeug (100) nach Anspruch 1, wobei die Getriebeanordnung (142) eine erste Getriebewelle (1423) und eine zweite Getriebewelle (1424) umfasst, wobei die erste Getriebewelle (1423) und die zweite Getriebewelle (1424) in einer Übertragungsweise miteinander verbunden sind, und ein Verhältnis einer Drehzahl der ersten Getriebewelle (1423) zu einer Drehzahl der zweiten Getriebewelle (1424) in dem Bereich von 3 bis 4,5 liegt; wobei der versetzte Antriebsstrang (163) eine zweite Welle umfasst, wobei die erste Welle (1633) und die zweite Welle (1634) in einer Übertragungsweise miteinander verbunden sind, und wobei die zweite Welle (1634) und die zweite Getriebewelle (1424) in einer Übertragungsweise miteinander verbunden sind.

11. Das elektrisch angetriebene Geländefahrzeug (100) nach Anspruch 1, wobei der Abstand von der ersten Gerade zu der zweiten Gerade in dem Bereich von 150 mm bis 450 mm liegt, sich eine Mittellinie einer zweiten Welle im Wesentlichen entlang einer zweiten Gerade erstreckt, und ein Abstand von der zweiten Gerade zu der ersten Gerade in dem Bereich von 50 mm bis 600 mm liegt.

12. Das elektrisch angetriebene Geländefahrzeug (100) nach Anspruch 1, wobei die Elektromotoranordnung (141) und die Antriebsachsenanordnung (161) auf derselben Seite der Getriebeanordnung (142) montiert sind, und der versetzte Antriebsstrang (163) auf der von der Elektromotoranordnung (141) abgewandten Seite der Getriebeanordnung (142) montiert ist.

13. Das elektrisch angetriebene Geländefahrzeug (100) nach Anspruch 1, wobei die Antriebsaggregatanordnung (B1) ein Gehäuse (B11) umfasst, das einen Aufnahmeraum definiert, wobei die Elektromotoranordnung (141), die Getriebeanordnung (142), die Antriebsachsenanordnung und der versetzte Antriebsstrang (163) zumindest teilweise in dem Aufnahmeraum angeordnet sind; wobei das Gehäuse (B11) einen Gehäusekörper (B111), ein Elektromotorgehäuse (B112), ein Getriebegehäuse (B113), ein Antriebsachsengehäuse (B114) und ein Versatzgehäuse (1635) umfasst; wobei die Elektromotoranordnung (141), die Getriebeanordnung (142) und die Antriebsachsenanordnung (161) zumindest teilweise in dem Gehäusekörper (B111) angeordnet sind.

14. Das elektrisch angetriebene Geländefahrzeug (100) nach Anspruch 1, wobei eine Übertragungsrichtung der Antriebskraft von der Elektromotoranordnung (141) zu der Getriebeanordnung (142) im Wesentlichen dieselbe ist wie eine Übertragungsrichtung der von dem versetzten Antriebsstrang (163) nach außerhalb der Antriebsaggregatanordnung (B1) ausgegebenen Antriebskraft.

15. Das elektrisch angetriebene Geländefahrzeug (100) nach Anspruch 13, wobei das Versatzgehäuse (1635) fest mit dem Gehäusekörper (B111) verbunden ist, und das Versatzgehäuse (1635) einen ersten Abschnitt (1635a) und einen zweiten Abschnitt (1635b) umfasst, wobei ein Ende des ersten Abschnitts (1635a) fest mit der Getriebeanordnung (142) verbunden ist, und das andere Ende des ersten Abschnitts (1635a) fest mit dem zweiten Abschnitt (1635b) verbunden ist.

## Revendications

1. Un véhicule tout-terrain électrique (100) comprenant
un châssis (11) ;
un carénage de véhicule (12) disposé au moins partiellement sur le châssis (11) ;
un ensemble de roues (13) comprenant un premier essieu (1311) et un deuxième essieu (1312) disposés au moins partiellement sur le châssis (11) ;
un système d'entraînement (14) comprenant un ensemble de moteur électrique (141) ;
un bloc-batterie (17) fournissant de l'énergie électrique au véhicule tout-terrain électrique (100) ; et
une unité de commande de moteur (15) connectée électriquement au moins partiellement à l'ensemble de moteur électrique (141) ;
dans lequel le bloc-batterie (17), l'ensemble de moteur électrique (141) et l'unité de commande de moteur (15) sont répartis sensiblement le long d'une direction avant-arrière du véhicule tout-terrain électrique (100), une projection de l'unité de commande de moteur (15), une projection du bloc-batterie (17) et une projection de l'ensemble de moteur électrique (141) toutes sur un plan perpendiculaire à une direction haut-bas du véhicule définissent conjointement une aire de projection du système tri-cœur, une longueur maximale occupée par l'aire de projection du système tri-cœur le long de la direction avant-arrière du véhicule est définie comme une longueur longitudinale tri-cœur, une projection d'une ligne centrale du premier essieu sur le plan perpendiculaire à la direction haut-bas du véhicule est définie comme une première ligne de projection, et une projection d'une ligne centrale du deuxième essieu sur le plan perpendiculaire à la direction haut-bas du véhicule est définie comme une deuxième ligne de projection, **caractérisé en ce que**,
une distance entre la première ligne de projection et la deuxième ligne de projection est définie comme une distance d'empattement, un rapport de la distance d'empattement à la longueur longitudinale tri-cœur est dans une plage de 0,7 à 2,5 ;
dans lequel le véhicule tout-terrain électrique (100) comprend en outre un ensemble motopropulseur (B1) comprenant l'ensemble de moteur électrique (141), un ensemble de boîte de vitesses (142), un ensemble d'essieu moteur (161), et une ligne de transmission décalée (163) ; l'ensemble de moteur électrique (141), l'ensemble d'essieu moteur (161) et la ligne de transmission décalée (163) étant tous disposés au moins partiellement sur l'ensemble de boîte de vitesses (142) ; l'ensemble de boîte de vitesses (142) comprenant un arbre de boîte de vitesses, et la ligne de transmission décalée (163) comprenant un premier arbre (1633), le premier arbre (1633) et l'arbre de boîte de vitesses étant reliés ensemble selon un mode de transmission, l'ensemble de moteur électrique (141) transmettant une force motrice à l'ensemble de boîte de vitesses (142) par l'arbre de boîte de vitesses, et l'ensemble de boîte de vitesses (142) transmettant la force motrice à la ligne de transmission décalée (163) ; une ligne centrale de l'arbre de boîte de vitesses s'étendant sensiblement le long d'une première ligne droite (L3), et une ligne centrale du premier arbre (1633) s'étendant sensiblement le long d'une deuxième ligne droite (L4), et une distance entre la première ligne droite (L3) et la deuxième ligne droite (L4) étant dans une plage de 80 mm à 900 mm.

2. Le véhicule tout-terrain électrique (100) selon la revendication 1, dans lequel le rapport de la distance d'empattement à la longueur longitudinale tri-cœur est dans une plage de 0,9 à 2,0.

3. Le véhicule tout-terrain électrique (100) selon la revendication 1, dans lequel une distance entre un bord de l'aire de projection du système tri-cœur adjacent à la première ligne de projection et la première ligne de projection est dans une plage de 0 mm à 1500 mm, et une distance entre un bord de l'aire de projection du système tri-cœur adjacent à la deuxième ligne de projection et la deuxième ligne de projection est dans une plage de 0 mm à 1500 mm.

4. Le véhicule tout-terrain électrique (100) selon la revendication 1, dans lequel au moins deux projections parmi une projection du bloc-batterie (17), une projection de l'unité de commande de moteur (15), et une projection de l'ensemble de moteur électrique (141), toutes sur un plan perpendiculaire à une direction avant-arrière du véhicule, se recouvrent au moins partiellement ; l'unité de commande de moteur (15) étant positionnée entre le bloc-batterie (17) et l'ensemble de moteur électrique (141), une longueur de côté la plus courte de l'ensemble de moteur électrique (141) s'étendant sensiblement le long de la direction avant-arrière du véhicule tout-terrain électrique (100).

5. Le véhicule tout-terrain électrique (100) selon la revendication 1, dans lequel au moins deux projections parmi une projection de l'unité de commande de moteur (15), une projection du bloc-batterie (17), et une projection de l'ensemble de moteur électrique (141) projetées sur un plan perpendiculaire à une direction haut-bas du véhicule se recouvrent au moins partiellement ; l'unité de commande de moteur (15) étant montée au moins partiellement au-dessus du bloc-batterie (17) et/ou de l'ensemble de moteur électrique (141).

6. Le véhicule tout-terrain électrique (100) selon la revendication 1, dans lequel une projection du bloc-batterie (17) se recouvre au moins partiellement avec une projection de l'ensemble de moteur électrique (141) sur le plan perpendiculaire à la direction avant-arrière du véhicule ; une projection de l'unité de commande de moteur (15) se recouvre au moins partiellement avec une projection du bloc-batterie (17) / de l'ensemble de moteur électrique (141) sur le plan perpendiculaire à la direction haut-bas du véhicule tout-terrain électrique (100) ; le bloc-batterie (17) étant monté au moins partiellement devant l'ensemble de moteur électrique (141), et l'unité de commande de moteur (15) étant montée au moins partiellement au-dessus de l'ensemble de moteur électrique (141) et/ou du bloc-batterie (17).

7. Le véhicule tout-terrain électrique (100) selon la revendication 1, dans lequel le véhicule tout-terrain électrique (100) définit un plan médian longitudinal (S2) perpendiculaire à une direction gauche-droite du véhicule tout-terrain électrique (100), et le véhicule tout-terrain électrique (100) étant sensiblement symétrique par rapport au plan médian longitudinal (S2) ; et le plan médian longitudinal (S2) intersectant au moins partiellement le bloc-batterie (17), l'unité de commande de moteur (15) et l'ensemble de moteur électrique (141).

8. Le véhicule tout-terrain électrique (100) selon la revendication 1, dans lequel l'ensemble de moteur électrique (141), le bloc-batterie (17) et l'unité de commande de moteur (15) sont répartis sensiblement le long d'une direction avant-arrière du véhicule tout-terrain électrique ; au moins deux projections parmi une projection du bloc-batterie, une projection de l'ensemble de moteur électrique (141), et une projection de l'unité de commande de moteur (15) sur un plan perpendiculaire à une direction avant-arrière du véhicule se recouvrent au moins partiellement ; l'aire de projection du bloc-batterie, de l'ensemble de moteur électrique (141), et de l'unité de commande de moteur (15) projetés sur le plan perpendiculaire à la direction avant-arrière du véhicule tout-terrain électrique (100) est définie comme une aire de projection maximale, l'aire de recouvrement de projection de deux quelconques parmi le bloc-batterie, l'ensemble de moteur électrique (141), et l'unité de commande de moteur (15) projetés sur le plan perpendiculaire à la direction avant-arrière du véhicule tout-terrain électrique (100) est définie comme une aire de recouvrement de projection, et un rapport de l'aire de projection maximale à l'aire de recouvrement de projection est dans une plage de 0,4 à 1,0 ; l'unité de commande de moteur (15) étant positionnée entre le bloc-batterie (17) et l'ensemble de moteur électrique (141), une longueur de côté la plus courte de l'ensemble de moteur électrique (141) s'étendant sensiblement le long de la direction avant-arrière du véhicule tout-terrain électrique (100).

9. Le véhicule tout-terrain électrique (100) selon la revendication 8, dans lequel le véhicule tout-terrain électrique (100) définit un plan médian longitudinal (S2) perpendiculaire à une direction gauche-droite du véhicule tout-terrain électrique, et le véhicule tout-terrain électrique étant sensiblement symétrique par rapport au plan médian longitudinal ; et le plan médian longitudinal (S2) intersectant au moins partiellement le bloc-batterie (17), l'unité de commande de moteur (15) et l'ensemble de moteur électrique (141).

10. Le véhicule tout-terrain électrique (100) selon la revendication 1, dans lequel l'ensemble de boîte de vitesses (142) comprend un premier arbre de boîte de vitesses (1423) et un deuxième arbre de boîte de vitesses (1424), le premier arbre de boîte de vitesses (1423) et le deuxième arbre de boîte de vitesses (1424) étant reliés ensemble selon un mode de transmission, et un rapport d'une vitesse de rotation du premier arbre de boîte de vitesses (1423) à une vitesse de rotation du deuxième arbre de boîte de vitesses (1424) étant dans une plage de 3 à 4,5 ; la ligne de transmission décalée (163) comprenant un deuxième arbre, le premier arbre (1633) et le deuxième arbre (1634) étant reliés ensemble selon un mode de transmission, et le deuxième arbre (1634) et le deuxième arbre de boîte de vitesses (1424) étant reliés ensemble selon un mode de transmission.

11. Le véhicule tout-terrain électrique (100) selon la revendication 1, dans lequel la distance entre la première ligne droite et la deuxième ligne droite est dans une plage de 150 mm à 450 mm, une ligne centrale de deuxième arbre s'étendant sensiblement le long d'une deuxième ligne droite, et une distance entre la deuxième ligne droite et la première ligne droite étant dans une plage de 50 mm à 600 mm.

12. Le véhicule tout-terrain électrique (100) selon la revendication 1, dans lequel l'ensemble de moteur électrique (141) et l'ensemble d'essieu moteur (161) sont montés sur le même côté de l'ensemble de boîte de vitesses (142), et la ligne de transmission décalée (163) est montée sur le côté de l'ensemble de boîte de vitesses (142) éloigné de l'ensemble de moteur électrique (141).

13. Le véhicule tout-terrain électrique (100) selon la revendication 1, dans lequel l'ensemble motopropulseur (B1) comprend un boîtier (B11) définissant un espace de logement, l'ensemble de moteur électrique (141), l'ensemble de boîte de vitesses (142), l'ensemble d'essieu moteur et la ligne de transmission décalée (163) étant disposés au moins partiellement dans l'espace de logement ; le boîtier (B11) comprenant un corps de boîtier (B111), un boîtier de moteur électrique (B112), un boîtier de boîte de vitesses (B113), un boîtier d'essieu moteur (B114) et un boîtier de décalage (1635) ; l'ensemble de moteur électrique (141), l'ensemble de boîte de vitesses (142) et l'ensemble d'essieu moteur (161) étant disposés au moins partiellement dans le corps de boîtier (B111).

14. Le véhicule tout-terrain électrique (100) selon la revendication 1, dans lequel une direction de transmission de la force motrice depuis l'ensemble de moteur électrique (141) vers l'ensemble de boîte de vitesses (142) est sensiblement identique à une direction de transmission de la force motrice délivrée par la ligne de transmission décalée (163) vers l'extérieur de l'ensemble motopropulseur (B1).

15. Le véhicule tout-terrain électrique (100) selon la revendication 13, dans lequel le boîtier de décalage (1635) est relié de manière fixe au corps de boîtier (B111), et le boîtier de décalage (1635) comprend une première portion (1635a) et une deuxième portion (1635b), une extrémité de la première portion (1635a) étant reliée de manière fixe à l'ensemble de boîte de vitesses (142), et l'autre extrémité de la première portion (1635a) étant reliée de manière fixe à la deuxième portion (1635b).
